# EUROPÄISCHE PATENTSCHRIFT

(11) **EP 3 613 911 B1**
(45) Veröffentlichungstag und Bekanntmachung des Hinweises auf die Patenterteilung: **20.01.2021**
(21) Anmeldenummer: 19179554.1
(22) Anmeldetag: 11.06.2019
(51) Int. Cl.: E04B 1/348, B60P 7/13, B65D 90/00

(54) **RAUMZELLEN-ANORDNUNG**
BOX ASSEMBLY
ARRANGEMENT DE CELLULE PRÉFABRIQUÉE

(30) Priorität: 21.08.2018 DE 202018104810 U
(43) Veröffentlichungstag der Anmeldung: 26.02.2020
(73) Patentinhaber: Modulraum GmbH, 89561 Dischingen-Eglingen (DE)
(72) Erfinder:
(74) Vertreter: Geitz Truckenmüller Lucht Christ

(56) Entgegenhaltungen:
- EP-A1- 3 293 128
- DE-U1- 29 900 115

## Beschreibung

Die Erfindung betrifft eine Raumzellen-Anordnung, umfassend mehrere Raumzellen, von denen wenigstens eine, vorzugsweise mobile bzw. transportable, obere Raumzelle auf wenigstens einer, vorzugsweise mobilen bzw. transportablen, unteren Raumzelle angeordnet ist, wobei die Raumzellen jeweils quaderförmig ausgebildet sind und jeweils acht, jeweils eine Raum-Ecke ausbildende, quaderförmige Eck-Verbindungs-Hohlkörper umfassen, und wobei wenigstens zwei oder vier obere Eck-Verbindungs-Hohlkörper der acht Eck-Verbindungs-Hohlkörper der unteren Raumzelle mit jeweils einem unteren Eck-Verbindungs-Hohlkörper der vier unteren Eck-Verbindungs-Hohlkörper der acht Eck-Verbindungs-Hohlkörper der oberen Raumzelle jeweils mittels eines Vertikal-Verbindungsmittels fest, jedoch wieder lösbar verbunden sind, und wobei jeder quaderförmige Eck-Verbindungs-Hohlkörper einen Hohlraum zur Aufnahme von Verbindungsmittel-Teilen und in einem ersten Außenwandteil wenigstens eine in den Hohlraum mündende erste Durchbrechung aufweist, und wobei jedes Vertikal-Verbindungsmittel vollständig innenliegend, also vollständig innerhalb eines von dem jeweiligen oberen Eck-Verbindungs-Hohlkörper und von dem jeweils zugeordneten unteren Eck-Verbindungs-Hohlkörper beanspruchten Raumes angeordnet ist.

Bei den Raumzellen kann es sich um sogenannte Mini-Module oder Container, vorzugsweise Wohn-, Büro- und/oder Baucontainer, insbesondere für Kindergärten, Schulen und Büros bzw. für Wohn- Büro- und Bauzwecke und/oder für Baustellen oder als Behelfs- oder Übergangsunterkunft handeln.

Solche quaderförmigen Raumzellen sind seit vielen Jahren allgemein bekannt geworden. Sie sind jeweils aus acht Eck-Verbindungs-Hohlkörpern aufgebaut, welche jeweils eine Raum-Ecke der acht Raum-Ecken ausbilden. Üblicherweise sind diese Raumzellen mit einem im Wesentlichen Quaderförmigen Fachwerk aus, vorzugsweise Eckprofile und/oder Randprofile ausbildenden, Boden-Rahmenprofilen, Decken-Rahmenprofilen und die Boden-Rahmenprofile mit den Decken-Rahmenprofilen verbindenden, auch als Vertikalpfosten oder Ecksäulen bezeichenbaren Stehern aufgebaut, die sich jeweils zwischen einem unteren und einem oberen Eck-Verbindungs-Hohlkörper der besagten acht Eck-Verbindungs-Hohlkörper erstrecken. Bevorzugt bestehen diese Eck-Verbindungs-Hohlkörper aus Gusseisen. Demgemäß können die Eck-Verbindungs-Hohlkörper auch als Gussecken bezeichnet werden. Die bekannten quaderförmigen Eck-Verbindungs-Hohlkörper weisen sechs Außenwände auf, von denen jede Außenwand senkrecht zu vier benachbarten Außenwänden ausgerichtet ist. Diese quaderförmigen Eck-Verbindungs-Hohlkörper weisen einen Hohlraum zur Aufnahme von Verbindungsmittel-Teilen auf. Ferner weisen diese Eck-Verbindungs-Hohlkörper. Diese bekannten Eck-Verbindungs-Hohlkörper weisen in einer ersten Außenwand ihrer Außenwände eine erste Durchbrechung, in einer dazu senkrecht ausgerichteten zweiten Außenwand ihrer Außenwände eine zweite Durchbrechung und in einer senkrecht zu der ersten Außenwand und senkrecht zu der zweiten Außenwand ausgerichteten dritten Außenwand der Außenwände eine dritte Durchbrechung auf. Jeder dieser Durchbrechungen ist im unverbauten Zustand des jeweiligen Eck-Verbindungs-Hohlkörpers nach außen offen und mündet in dessen Hohlraum.

Die Raumzellen werden bislang bei der Montage mittels außenliegenden Spannschrauben miteinander zu einer auch als Raumzellen-Anordnung bezeichenbaren Raumzellen-Einheit verschraubt. Hierzu werden die vertikalen Außenränder der die Raumzellen-Einheit bildenden einzelnen Raumzellen ausschließlich mittels Vertikal-Verbindungsmittel bildenden, außenliegenden, vertikalen Spannschrauben vertikal miteinander verbunden, während horizontal benachbarte einzelne Raumzellen mittels Horizontal-Verbindungsmittel bildenden, außenliegenden, horizontalen Spannschrauben miteinander verbunden werden. Diese Spannschrauben umfassen Verbindungsteile und Befestigungsteile, welche jeweils von außen durch jeweils eine Durchbrechung eines Außenwandteils eines ersten Eck-Verbindungs-Körpers greifen und den Durchbrechungsrand hintergreifen. Diese außenliegenden Spannschrauben sind hinderlich bei der Montage bzw. Anbringung von Fassaden an den Raumzellen, beispielsweise bei Putzfassaden, weil diese aufgrund der außenliegenden Spannschrauben nicht über die Eck-Verbindungs-Körper geführt werden können. Dadurch wird das äußere Erscheinungsbild der Raumzellen getrübt und es können sich unerwünschte Kältebrücken ausbilden. Aufgrund der beengten Platzverhältnisse können an ein und demselben Eck-Verbindungs-Körper nicht sowohl eine horizontale Spannschraube als auch eine vertikale Spannschraube befestigt werden. Allerdings lassen sich die außenliegenden Spannschrauben sehr einfach montieren und wieder demontieren.

Aus der EP 3 293 128 A1 ist eine Verriegelungsvorrichtung für Container bekannt geworden. Diese Druckschrift offenbart die Merkmale des Oberbegriffs des Anspruches 1. Die Verriegelungsvorrichtung enthält ein Vertikal-Verbindungsmittel, das einen oberen Konus und einen unteren Konus umfasst, die über einen zylindrischen Verbindungsteil starr miteinander verbunden sind. Dieses Vertikal-Verbindungsmittel ist sowohl im entriegelten Zustand als auch im verriegelten Zustand um eine vertikale Rotationsachse relativ zu einem Gehäuse bzw. zu dessen Grundplatte frei drehbar, um die beiden Konen von einer Freigabestellung, in welcher die miteinander zu verbindenden Eck-Verbindungs-Hohlkörper der betroffenen beiden Container aufeinander aufgesetzt oder vollständig voneinander abgehoben werden können, um 90 Grad in eine Verriegelungsstellung drehen zu können, und umgekehrt, in welcher die betroffenen beiden Eck-Verbindungs-Hohlkörper der besagten Container aneinander befestigt sind. Um zu vermeiden, dass der obere Konus und der untere Konus unbeabsichtigt um die Rotationsachse gedreht werden, ist eine separate Befestigungseinheit vorgesehen, die in eine Front-Öffnung des unteren Eck-Verbindungs-Hohlkörpers des oberen Containers oder durch eine Front-Öffnung des oberen Eck-Verbindungs-Hohlkörpers des unteren Containers eingesteckt und dort befestigt wird.

Aus der DE 299 00 115 U1 ist ein Riegeleinsatz für die Eckstücke von Containern bekannt geworden, der zumindest implizit die Merkmale des Oberbegriffs des Anspruches 1 offenbart. Als Vertikal-Verbindungsmittel dient ein Riegeleinsatz. Der Riegeleinsatz besteht zum einen aus einem Riegel und zum anderen aus einem Riegeleinsatz-Gehäuse. Der Riegel besteht aus einer Riegelplatte und einer zu deren Plattenebene senkrecht ausgebildeten Achse mit einem Schlitz, in dem ein Riegelkeil in Form einer Trapez-Platte befestigt ist. Das Riegeleinsatz-Gehäuse besteht aus einem Pass-Stück und einem Eingriffsabschnitt. Zwischen den Eckstücken ist zwingend ein Vertikal-Spiel ausgebildet, das sich aus einem lichten Abstand zwischen der Riegelplatte und dem Riegelkeil ergibt. Folglich können die beiden Eckstücke, in deren Öffnungen der Riegeleinsatz eingesetzt ist, stets um das besagte Vertikal-Spiel in der vertikalen Richtung voneinander abgehoben werden.

Es ist eine Aufgabe der Erfindung, eine Raumzellen-Anordnung der eingangs genannten Art zur Verfügung zu stellen, bei der eine Montage bzw. Anbringung einer bis an die Außenränder der jeweiligen Außenwand der jeweiligen Raumzelle vollflächig durchgehenden Fassade, beispielsweise Putzfassade ohne störende Teile möglich ist und bei der trotzdem eine vergleichsweise einfache Montage und Demontage des jeweiligen Vertikal-Verbindungsmittels möglich ist, wobei mit dem jeweiligen Vertikal-Verbindungsmittel eine Spannkraft erzielt werden kann, die gleich groß oder sogar noch größer ist als mit den bisherigen außenliegenden vertikalen Spannschrauben.

Diese Aufgabe wird durch die Merkmale des Anspruches 1, insbesondere dadurch gelöst, dass jedes Vertikal-Verbindungsmittel einen, sich in einer Keil-Spannstellung befindlichen, vorzugsweise von außen, insbesondere manuell, anbringbaren und, wieder lösbaren Keil umfasst, mittels dessen der jeweilige obere Eck-Verbindungs-Hohlkörper der unteren Raumzelle mit dem jeweils zugeordneten unteren Eck-Verbindungs-Hohlkörper der oberen Raumzelle jeweils unter Ausbildung einer innenliegenden Klemmverbindung vertikal gegeneinander, wiederlösbar verspannt sind. Bevorzugt sind alle Vertikal-Verbindungsmittel gleich gestaltet.

Dadurch kann eine Befestigung bzw. Anbringung einer Fassade ohne störende Teile erfolgen. Außerdem ist es dadurch möglich, dass alle Verbindungen zur Verbindung der Raumzellen untereinander in den Eck-Verbindungs-Hohlkörpern angeordnet sind. Es können erstmals alle Kopplungsrichtungen an einem Kopplungsstoß bzw. an ein und demselben Eck-Verbindungs-Körper verwirklicht werden. Das erfindungsgemäße Vertikal-Verbindungsmittel kann, durch Eintreiben, insbesondere Einschlagen, und Wiederlösen des Keils, einfach montiert und einfach demontiert werden. Durch den Einsatz des erfindungsgemäßen Vertikal-Verbindungsmittels kann eine Spannkraft erzielt werden, die gleich groß oder sogar noch größer ist als mit den bisherigen außenliegenden vertikalen Spannschrauben. Mit Hilfe der erfindungsgemäßen Vertikal-Verbindungsmittel ist eine vorteilhafte kraftschlüssige Klemmverbindung gefunden, die überraschend einfach mit einem Keil verwirklicht ist.

Gemäß einer ganz besonders bevorzugten Ausgestaltung kann vorgesehen sein, dass jedes Vertikal-Verbindungsmittel einen sich sowohl durch die erste Durchbrechung des ersten Außenwandteils des jeweiligen oberen Eck-Verbindungs-Hohlkörpers der unteren Raumzelle als auch durch die erste Durchbrechung des dem ersten Außenwandteil des jeweiligen oberen Eck-Verbindungs-Hohlkörpers gegenüberliegenden ersten Außenwandteils des jeweiligen unteren Eck-Verbindungs-Hohlkörpers der oberen Raumzelle in Richtung seiner Verbindungskörper-Längsachse erstreckenden, vorzugsweise langgestreckten, Verbindungskörper aufweist, an dem wenigstens ein erster Befestigungskörper und ein zweiter Befestigungskörper befestigt sind, wobei der erste Befestigungskörper einen Durchbrechungsrand der ersten Durchbrechung des jeweiligen oberen Eck-Verbindungs-Hohlkörpers der unteren Raumzelle hintergreift bzw. untergreift und der zweite Befestigungskörper einen Durchbrechungsrand der ersten Durchbrechung des jeweiligen unteren Eck-Verbindungs-Hohlkörpers der oberen Raumzelle hintergreift bzw. übergreift und dass, entweder der erste Befestigungskörper mit dem Verbindungskörper fest, vorzugsweise starr, verbunden ist und der zweite Befestigungskörper relativ zu dem Verbindungskörper entlang dessen Verbindungskörper-Längsachse verschieblich mit dem Verbindungskörper verbunden ist, wobei der Keil mit einer ersten Keilfläche an einem Keil-Anlagekörper des Verbindungskörpers anliegt und mit einer zweiten Keilfläche, die von der ersten Keilfläche weg weist, an dem relativ zu dem Verbindungskörper verschieblichen zweiten Befestigungskörper anliegt, oder der erste Befestigungskörper relativ zu dem Verbindungskörper entlang dessen Verbindungskörper-Längsachse verschieblich mit dem Verbindungskörper verbunden ist und der zweite Befestigungskörper mit dem Verbindungskörper fest, vorzugsweise starr, verbunden ist, wobei der Keil mit einer ersten Keilfläche an einem Keil-Anlagekörper des Verbindungskörpers anliegt und mit einer zweiten Keilfläche, die von der ersten Keilfläche weg weist, an dem relativ zu dem Verbindungskörper verschieblichen ersten Befestigungskörper anliegt. Dadurch lässt sich eine ganz besonders einfach montierbare und einfach demontierbare sowie besonders stabile, innenliegende Vertikalverbindung verwirklichen, mittels der große Spann- bzw. Verbindungs-Kräfte verwirklichbar sind.

Gemäß einer Weiterbildung kann vorgesehen sein, dass der Keil-Anlagekörper im Bereich eines freien ersten Verbindungskörper-Endes des Verbindungskörpers angeordnet ist. Dadurch wird in dem den Keil aufnehmenden Hohlraum einer der beiden mittels des Vertikal-Verbindungsmittels gegeneinander verspannten Eck-Verbindungskörper ein nur minimaler Platz beansprucht, so dass der übrige Hohlraum für eine Montage bzw. Demontage weiterer Verbindungselemente nutzbar ist.

Gemäß einer vorteilhaften Ausgestaltung kann vorgesehen sein, dass der Keil-Anlagekörper eine Anlage-Schrägfläche für den Keil aufweist, an welcher die erste Keilfläche des Keils, vorzugsweise flächig, anliegt. Vorzugsweise schließt die Anlage-Schrägfläche mit der Verbindungskörper-Längsachse einen Winkel ein, der kleiner ist als 90 Grad. Dadurch lassen sich die Keil-Spannkräfte besonders vorteilhaft unter Minimierung von Spannungsspitzen übertragen.

Gemäß einer Weiterbildung kann vorgesehen sein, dass der Verbindungskörper einen Keilaufnahme-Schlitz zur Aufnahme des Keils aufweist, der von dem Keil-Anlagekörper begrenzt ist. Dadurch lassen sich vorteilhafte Montage- und Führungsverhältnisse erreichen.

Gemäß einer besonders vorteilhaften Ausführungsvariante kann vorgesehen sein, dass der mit dem Verbindungskörper fest verbundene Befestigungskörper sich entlang seiner Befestigungskörper-Längsachse erstreckt und dass der Keilaufnahme-Schlitz sich in einer Querrichtung senkrecht zu der Befestigungskörper-Längsachse durch den Verbindungskörper erstreckt. Dadurch werden die Demontage- bzw. Montagemöglichkeiten weiter vereinfacht.

Gemäß einer bevorzugten Weiterbildung kann vorgesehen sein, dass es sich bei dem Keilaufnahme-Schlitz um eine Durchbrechung des Verbindungskörpers handelt. Dadurch kann eine besonders sichere und stabile Keilverbindung verwirklicht werden, die vorteilhafte Keilführungsverhältnisse sowie vorteilhafte Montage- und Demontageverhältnisse ermöglicht.

Gemäß einer vorteilhaften Ausführung kann vorgesehen sein, dass der erste Befestigungskörper eine erste Befestigungskörper-Durchbrechung aufweist, durch die der Verbindungskörper durchgesteckt ist und/oder dass der zweite Befestigungskörper eine zweite Befestigungskörper-Durchbrechung aufweist, durch die der Verbindungskörper durchgesteckt ist. Dadurch lässt sich eine besonders stabile und einfach herstellbare Vertikalverbindung verwirklichen.

Gemäß einer bevorzugten Weiterbildung kann vorgesehen sein, dass es sich bei dem ersten Befestigungskörper um eine Platte handelt und/oder dass es sich bei dem zweiten Befestigungskörper um eine Platte handelt. Dadurch können eine besonders einfache und kostengünstige Herstellung und vorteilhafte Verbindungsverhältnisse erreicht werden.

Vorzugsweise können der erste Befestigungskörper und der zweite Befestigungskörper gleich oder im Wesentlichen gleich gestaltet sein. Dadurch ist eine noch kostengünstigere Herstellung und Handhabung ermöglicht.

Gemäß einer Ausgestaltung kann vorgesehen sein, dass der relativ zu dem Verbindungskörper verschiebliche Befestigungskörper um die Verbindungskörper-Längsachse frei drehbar angeordnet ist. Dadurch kann die Demontage bzw. Montage weiter vereinfacht werden.

Gemäß einer besonders bevorzugten Ausgestaltung kann vorgesehen sein, dass an dem Verbindungskörper in einem zwischen dem ersten Befestigungskörper und dem zweiten Befestigungskörper angeordneten ersten Verbindungskörper-Vertikalbereich ein relativ zu dem Verbindungskörper entlang dessen Verbindungskörper-Längsachse verschieblicher Stützkörper befestigt ist, dessen Außenkontur derart auf eine Innenkontur eines der Außenkontur gegenüberliegenden Durchbrechungsrands der ersten Durchbrechung abgestimmt gestaltet ist, dass der Stützkörper unter Ausbildung eines geringen Umfangs-Spalts in der ersten Durchbrechung aufgenommen ist. Dadurch kann bei der Montage ein Verkippen oder gar Umkippen des innenliegenden Verbindungskörpers zusammen mit dem mit diesem fest verbundenen Befestigungskörper verhindert oder minimiert werden. Dadurch wird eine einfache und störungsfreie Montage der zweiten oberen Raumzelle auf der ersten unteren Raumzelle ermöglicht.

Gemäß einer vorteilhaften Ausführung kann vorgesehen sein, dass der Stützkörper eine Stützkörper-Durchbrechung aufweist, durch die der Verbindungskörper durchgesteckt ist. Dadurch lässt sich eine besonders stabile und einfach herstellbare Vertikalverbindung verwirklichen.

Gemäß einer bevorzugten Weiterbildung kann vorgesehen sein, dass es sich bei dem Stützkörper um eine Platte handelt. Dadurch können eine besonders einfache und kostengünstige Herstellung und vorteilhafte Verbindungsverhältnisse erreicht werden.

Gemäß einer bevorzugten Ausgestaltung kann vorgesehen sein, dass der Stützkörper um die Verbindungskörper-Längsachse frei drehbar angeordnet ist. Dadurch kann die Demontage bzw. Montage weiter vereinfacht werden.

Gemäß einer besonders vorteilhaften Ausführungsvariante kann vorgesehen sein, dass an dem Verbindungskörper in einem zwischen dem Stützkörper und dem ersten Befestigungskörper oder in einem zwischen dem Stützkörper und dem zweiten Befestigungskörper angeordneten zweiten Verbindungskörper-Vertikalbereich ein relativ zu dem Verbindungskörper entlang dessen Verbindungskörper-Längsachse verschieblicher Abstandvermittlungskörper befestigt ist, der entweder den Stützkörper und den ersten Befestigungskörper in einem seiner Abstandvermittlungskörper-Höhe entsprechenden ersten Längs- bzw. Vertikalabstand zueinander hält oder den Stützkörper und den zweiten Befestigungskörper in einem seiner Abstandvermittlungskörper-Höhe entsprechenden ersten Längs- bzw. Vertikalabstand zueinander hält. Vorzugsweise beträgt der erste Längs- bzw. Vertikalabstand 25 mm. Dadurch lässt sich die Montage weiter erleichtern und es kann vorteilhafte Anpassung an die geometrischen Gegebenheiten erreicht werden.

Gemäß einer besonders bevorzugten Ausgestaltung kann vorgesehen sein, dass der Stützköper in einer fertig montierten Stellung des Vertikal-Verbindungsmittels sowohl in die erste Durchbrechung des oberen Eck-Verbindungs-Hohlkörpers der unteren Raumzelle als auch in die erste Durchbrechung des unteren Eck-Verbindungs-Hohlkörpers der oberen Raumzelle hineinragt. Dadurch kann zwischen den beiden vertikal gegeneinander verspannten Eck-Verbindungs-Hohlkörpern der zugeordneten beiden Raumzellen eine formschlüssige Verbindung verwirklicht werden, welche ein horizontales Verschieben der beiden Raumzellen relativ zueinander, beispielsweise bei einem Auftreten von Erdbeben, verhindert oder auf einen minimalen Verschiebebereich beschränken kann, der für die Statik der übereinandergestapelten Raumzellen ohne Relevanz ist.

Gemäß einer bevorzugten Ausgestaltung kann vorgesehen sein, dass der Verbindungskörper ein freies zweites Verbindungskörper-Ende aufweist, das zu dem mit dem Verbindungskörper fest verbundenen Befestigungskörper einen zweiten Längs- bzw. Vertikalabstand aufweist. Vorzugsweise ist der zweite Längs- bzw. Vertikalabstand kleiner als der erste Längs- bzw. Vertikalabstand. Vorzugsweise beträgt der zweite Längs- bzw. Vertikalabstand 60 mm. Dadurch kann in einer Vormontagephase eine vorteilhafte Abstützung des Verbindungskörpers an einer gegenüberliegenden Innenfläche eines der Eck-Verbindungs-Körper in einer Vormontagestellung erreicht werden, in der eine vorteilhafte Platzierung und Abstützung des Stützkörpers in der ersten Durchbrechung möglich ist, ohne dass er über die erste Außenwand hinausragt.

Gemäß einer besonders vorteilhaften Ausgestaltung kann vorgesehen sein, dass der Verbindungskörper, der erste Befestigungskörper, der Abstandsvermittlungskörper und der Stützkörper derart aufeinander abgestimmt gestaltet sind, dass der Stützkörper bzw. dessen, in der Einbaustellung obere, erste Hauptfläche zu dem, in der Einbaustellung unteren, zweiten Verbindungskörper-Ende des Verbindungskörpers einen ersten Längsabstand aufweist, der gleich groß oder kleiner ist als ein zweiter Längsabstand zwischen einer unteren Innenfläche eines unteren Außenwandteils des unteren Eck-Verbindungs-Hohlkörpers und einer oberen Außenfläche des die erste Durchbrechung aufweisenden ersten Außenwandteils des unteren Eck-Verbindungskörpers. Dadurch kann erreicht werden, dass dann, wenn der Verbindungskörper sich in einer oder der Vormontagephase in einer oder der Vormontagestellung mit seinem freien zweiten Verbindungskörper-Ende auf der gegenüberliegenden unteren Innenfläche des unteren Eck-Verbindungs-Hohlkörpers abstützt, der Stützkörper nicht nach oben über diesen Eck-Verbindungs-Hohlkörper heraussteht. Dadurch kann in dieser Vormontagephase die auf die untere Raumzelle, vorzugsweise mittels eines Krans, aufgesetzte obere Raumzelle noch relativ zu der unteren Raumzelle horizontal verschoben werden, bis eine gewünschte Endstellung erreicht ist, beispielsweise bei der bei gleich großen Eck-Verbindungs-Hohlkörpern die unteren Eckverbindungs-Hohlkörper der oberen Raumzelle mit den oberen Eck-Verbindungs-Hohlkörpern der unteren Raumzelle fluchten.

Gemäß einer besonders bevorzugten Ausführungsvariante kann vorgesehen sein, dass jeder Eck-Verbindungs-Hohlkörper wenigstens eine zweite Durchbrechung in einem zweiten Außenwandteil aufweist, das senkrecht zu dem die erste Durchbrechung aufweisenden ersten Außenwandteil ausgerichtet ist, wobei die zweite Durchbrechung in den Hohlraum mündet sowie derart angeordnet und gestaltet ist, dass der Keil durch einen Eingriff von außen in oder durch die zweite Durchbrechung, vorzugsweise mittels eines, insbesondere manuell betätigbaren, Werkzeugs, lösbar ist und von außen wieder in seine Keil-Spannstellung überführbar ist, beispielsweise durch Einschlagen mittels eines Hammers.

Gemäß einer besonders bevorzugten Ausgestaltung kann vorgesehen sein, dass jeder Eck-Verbindungs-Hohlkörper wenigstens eine dritte Durchbrechung in einem dritten Außenwandteil aufweist, das senkrecht zu dem die erste Durchbrechung aufweisenden ersten Außenwandteil und senkrecht zu dem die zweite Durchbrechung aufweisenden zweiten Außenwandteil ausgerichtet ist, wobei die dritte Durchbrechung in den Hohlraum mündet. Dadurch kann in besonders vorteilhafter Art und Weise an ein und demselben Eck-Verbindungs-Hohlkörper bzw. an einer Kopplungsstelle zusätzlich auch eine vollständig innenliegende horizontale Verbindung zwischen horizontal benachbarten Eck-Verbindungs-Hohlkörpern verwirklicht werden. Eine solche vollständig innenliegende horizontale Verbindung einzelner Raumzellen über zwei benachbarte Eck-Verbindungskörper kann besonders einfach mit Hilfe einer vollständig innenliegenden horizontalen Spannschraube verwirklicht werden. Letztere kann beispielsweise aus einer, vorzugsweise als Sechskantschraube gestalteten, Gewindeschraube mit einem Schrauben-Schaft mit einem Außengewinde, zwei auf den Schrauben-Schaft aufgesteckten und entlang des Schrauben-Schafts verschiebbaren Befestigungsplatten und einer, vorzugsweise als Sechskantmutter gestalteten, Mutter bestehen, die auf das Außengewinde der Gewindeschraube aufgeschraubt ist. Die Montage und das Anziehen bzw. wieder Lösen der Schraubverbindung kann vorteilhaft durch einen Eingriff von außen in oder durch die erste Durchbrechung oder in oder durch die zweite Durchbrechung, vorzugsweise mittels eines, insbesondere manuell betätigbaren, Werkzeugs erfolgen.

Gemäß einer bevorzugten Weiterbildung kann es sich bei dem Verbindungskörper um einen kreiszylindrischen Bolzen handeln. Dieser kann einfach und kostengünstig hergestellt werden.

Es versteht sich, dass die vorstehenden Maßnahmen und Merkmale im Rahmen der Ausführbarkeit der Erfindung beliebig kombinierbar sind.

Weitere Maßnahmen, Gesichtspunkte und Merkmale sind in den Ansprüchen sowie in dem nachstehenden Beschreibungsteil enthalten, in dem ein bevorzugtes Ausführungsbeispiel der Erfindung anhand der Figuren näher beschrieben wird.

Es zeigen:
- Fig. 1: eine mit vier Raumzellen umfassende Raumzellen-Anordnung in einer perspektivischen Darstellung;
- Fig. 2: einen Eck-Verbindungs-Hohlkörper in einer perspektivischen Darstellung;
- Fig. 2.1: den Eck-Verbindungs-Hohlkörper gemäß Fig. 2 in einer Oberansicht;
- Fig. 2.2: den Eck-Verbindungs-Hohlkörper gemäß Fig. 2 in einer Seitenansicht von links;
- Fig. 2.3: den Eck-Verbindungs-Hohlkörper gemäß Fig. 2 in einer Seitenansicht von rechts;
- Fig. 3: einen Vertikal-Verbindungskörper in einer perspektiven Zusammenbau-Darstellung;
- Fig. 3.1: den Vertikal-Verbindungskörper gemäß Fig. 3 in einer Seitenansicht von links;
- Fig. 3.2: den Vertikal-Verbindungskörper gemäß Fig. 3 in einer Seitenansicht von rechts;
- Fig. 3.3: den Vertikal-Verbindungskörper gemäß Fig. 3 in einer Oberansicht;
- Fig. 4: einen Verbindungskörper des Vertikal-Verbindungskörpers gemäß Fig. 3 in einer perspektivischen Darstellung;
- Fig. 4.1: den Verbindungskörper gemäß Fig. 4 in einer Draufsicht;
- Fig. 4.2: den Verbindungskörper gemäß Fig. 4 in einer Seitenansicht von links;
- Fig. 4.3: den Verbindungskörper gemäß Fig. 4 in einem Schnitt entlang der Schnittlinien 4.3-4.3 in Fig. 4.1;
- Fig. 5: einen Befestigungskörper des Vertikal-Verbindungskörpers gemäß Fig. 3 in einer perspektivischen Darstellung;
- Fig. 5.1: den Befestigungskörper gemäß Fig. 5 in einer Seitenansicht;
- Fig. 5.2: den Befestigungskörper gemäß Fig. 5 in einer Draufsicht;
- Fig. 6: einen Stützkörper des Vertikal-Verbindungskörpers gemäß Fig. 3 in einer perspektivischen Darstellung;
- Fig. 6.1: den Stützkörper gemäß Fig. 6 in einer Seitenansicht;
- Fig. 6.2: den Stützkörper gemäß Fig. 6 in einer Draufsicht;
- Fig. 7: einen Keil des Vertikal-Verbindungskörpers gemäß Fig. 3 in einer perspektivischen Darstellung;
- Fig. 7.1: den Keil gemäß Fig. 7 in einer Draufsicht;
- Fig. 7.2: den Keil gemäß Fig. 7 in einer Seitenansicht von links;
- Fig. 7.3: den Keil gemäß Fig. 7 in einer Oberansicht;
- Fig. 8: eine Anordnung von vier Eck-Verbindungs-Hohlkörpern der vier Raumzellen der Raumzellen-Anordnung gemäß Fig. 1 in einer Draufsicht;
- Fig. 8.1: einen Schnitt entlang der Schnittlinien B-B in Fig. 8;
- Fig. 8.2: einen Schnitt entlang der Schnittlinien A-A in Fig. 8;
- Fig. 8.3: einen Schnitt entlang der Schnittlinien C-C in Fig. 8

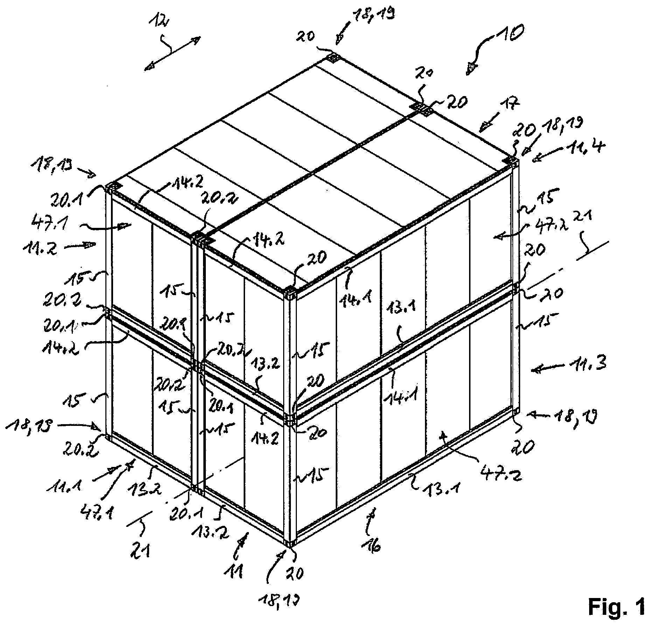

Die in Figur 1 gezeigte Raumzellen-Anordnung 10 umfasst vier mobile bzw. transportable einzelne Raumzellen 11; 11.1, 11.2, 11.3, 11.4 in Form von Containern. Die Raumzellen-Anordnung 10 kann auch als Raumzellen-Einheit bezeichnet werden. Jede Raumzelle 11; 11.1, 11.2, 11.3, 11.4 ist quaderförmig gestaltet und erstreckt sich in Richtung einer Raumzellen-Längsrichtung 12. Jede Raumzelle 11; 11.1, 11.2, 11.3, 11.4 ist aus einem quaderförmigen, in sich stabilen und steifen Fachwerk aufgebaut. Im Ausführungsbeispiel spannt das jeweilige Fachwerk einen rechteckigen Grundriss auf. Es versteht sich jedoch, dass das jeweilige Fachwerk zumindest von zwei oder von jeweils zwei der vertikal übereinander angeordneten Raumzellen auch einen viereckigen Grundriss aufspannen kann. Es versteht sich ferner, dass zumindest zwei oder jeweils zwei der vertikal übereinander angeordneten Raumzellen aus einem würfelförmigen, in sich stabilen und steifen Fachwerk aufgebaut sein können.

Jedes Fachwerk umfasst Boden-Rahmenprofile 13.1, 13.2 Decken-Rahmenprofile 14.1, 14.2 und Steher 15. Die Steher 15 sind auch als Vertikalpfosten oder Ecksäulen bezeichenbar. Jedes Fachwerk umfasst einen mit den Boden-Rahmenprofilen 13.1, 13.2 gebildeten, stabilen und steifen Boden-Rahmen 16 und einen mit den Decken-Rahmenprofilen 14.1, 14.2 gebildeten, stabilen und steifen Decken-Rahmen 17. Jeder Boden-Rahmen 16 und jeder Decken-Rahmen 17 ist im Wesentlichen viereckig gestaltet, hat also jeweils vier in einer Rahmenebene angeordnete Rahmenecken 18 bezeichnet sind. Jede Rahmenecke 18 ist mit einem quaderförmigen Eck-Verbindungs-Hohlkörper 20; 20.1, 20.2 gebildet. Jeder Eck-Verbindungs-Hohlkörper 20; 20.1, 20.2 ist unmittelbar oder mittelbar fest mit dem jeweiligen Rahmen 16, 17 und mit dem jeweiligen Steher 15 verbunden. Die sich zu jeweils einer Rahmenecke bzw. Raumecke 18 des Boden-Rahmens 16 erstreckenden Boden-Rahmenprofile 13.1, 13.2 schließen untereinander einen Winkel von 90 Grad ein bzw. verlaufen senkrecht zueinander. Die sich zu jeweils einer Rahmenecke 18 des Dach- bzw. Decken-Rahmens 17 erstreckenden Decken-Rahmenprofile 14.1, 14.2 schließen untereinander einen Winkel von 90 Grad ein bzw. verlaufen senkrecht zueinander. Bei jeder Raumzelle 11; 11.1, 11.2, 11.3, 11.4 sind jeweils wenigstens zwei Boden-Rahmenprofile 13.1, 13.2 der Boden-Rahmenprofile unmittelbar oder mittelbar mit einem Eck-Verbindungs-Hohlkörper 20; 20.1, 20.2 verbunden. Jede Raumzelle 11; 11.1, 11.2, 11.3, 11.4 ist mit acht Eck-Verbindungs-Hohlkörpern 20; 20.1, 20.2 gestaltet. Die quaderförmigen Eck-Verbindungs-Hohlkörper 20; 20.1, 20.2 bilden jeweils eine Raumecke 19 der jeweiligen Raumzelle aus. Bei jeder Raumzelle 11; 11.1, 11.2, 11.3, 11.4 sind wenigstens zwei Decken-Rahmenprofile 14.1, 14.2 der Decken-Rahmenprofile unmittelbar oder mittelbar mit einem Eck-Verbindungs-Hohlkörper 20; 20.1, 20.2 verbunden. Bei jeder Raumzelle 11; 11.1, 11.2, 11.3, 11.4 sind jeweils zwei der jeweils vertikal übereinander angeordneten Eck-Verbindungs-Hohlkörper 20; 20.1, 20.2 der insgesamt acht Eck-Verbindungs-Hohlkörper 11; 11.1, 11.2, 11.3, 11.4 über jeweils einen Steher 15 der wenigstens vier Steher 15 miteinander verbunden. Die Steher 15 verbinden die Boden-Rahmenprofile 13.1, 13.2 mit den Decken-Rahmenprofilen 14.1, 14.2 über die Eck-Verbindungs-Hohlkörper 20; 20.1, 20.1.

In dem in Figur 1 gezeigten Ausführungsbeispiel sind jeweils zwei der gezeigten vier Raumzellen 11.1, 11.2, 11.3, 11.4 übereinander angeordnet. Dabei ist jeweils auf eine untere Raumzelle 11.1, 11.3 eine obere Raumzelle 11.2, 11.4 aufgesetzt. Die jeweilige obere Raumzelle 11.2, 11.4 wird von der zugeordneten unteren Raumzelle 11.1, 11.3 getragen.

Die einzelnen Raumzellen 11.1, 11.2, 11.3, 11.4 sind miteinander fest, jedoch wieder lösbar verbunden. Hierzu ist jeder der oberen Eck-Verbindungs-Hohlkörper 20.1, 20.2 der jeweiligen unteren Raumzelle 11.1, 11.3 mit jeweils einem vertikal benachbarten, unteren Eck-Verbindungs-Hohlkörper 20.1, 20.2 der jeweiligen oberen Raumzelle 11.2, 11.4 mittels eines innenliegenden Vertikal-Verbindungsmittels 24 fest, jedoch wieder lösbar verbunden. Jedes dieser Vertikal-Verbindungsmittel 24 ist vollständig innenliegend, also vollständig innerhalb eines von dem jeweiligen oberen Eck-Verbindungs-Hohlkörper 20.1, 20.2 und von dem jeweils zugeordneten unteren Eck-Verbindungs-Hohlkörper 20.1, 20.2 beanspruchten Raumes angeordnet. Mit anderen Worten gesagt, ragt also das jeweilige innenliegende Vertikal-Verbindungsmittel 24 nicht über den besagten Raum hinaus. In dem gezeigten Ausführungsbeispiel sind alle Vertikal-Verbindungsmittel 24 gleich gestaltet. Außerdem sind die beiden unteren Raumzellen 11.1, 11.3 und auch die beiden oberen Raumzellen 11.2, 11.4 jeweils fest, jedoch wiederlösbar miteinander über innenliegende Horizontal-Verbindungsmittel 30 verbunden. Hierzu sind jeweils zwei horizontal benachbarte Eck-Verbindungs-Hohlkörper 20.1, 20.2 der im gezeigten Ausführungsbeispiel insgesamt sechzehn horizontal benachbarten Eck-Verbindungs-Hohlkörper 20.2, 20.2 mittels eines innenliegenden Horizontal-Verbindungsmittels 30 fest, jedoch wieder lösbar verbunden. Jedes dieser Horizontal-Verbindungsmittel 30 ist vollständig innenliegend, also vollständig innerhalb eines von den jeweiligen beiden horizontal benachbarten Hohlkörpern 20.1, 20.2 beanspruchten Raumes angeordnet. Mit anderen Worten gesagt, ragt also das jeweilige innenliegende Horizontal-Verbindungsmittel 30 nicht über den besagten Raum hinaus. In dem gezeigten Ausführungsbeispiel sind alle Horizontal-Verbindungsmittel 30 gleich gestaltet.

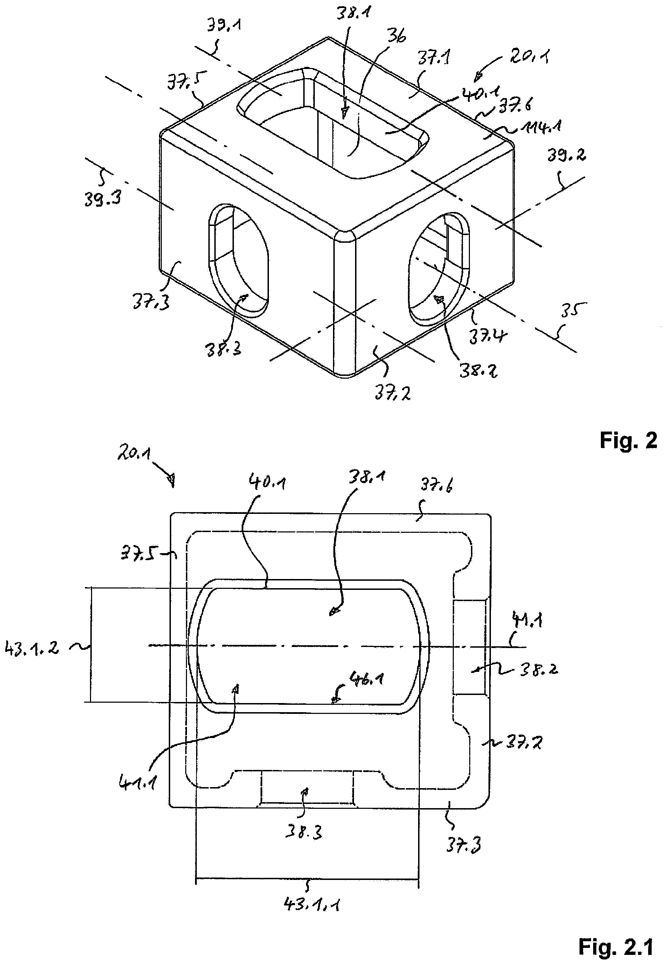

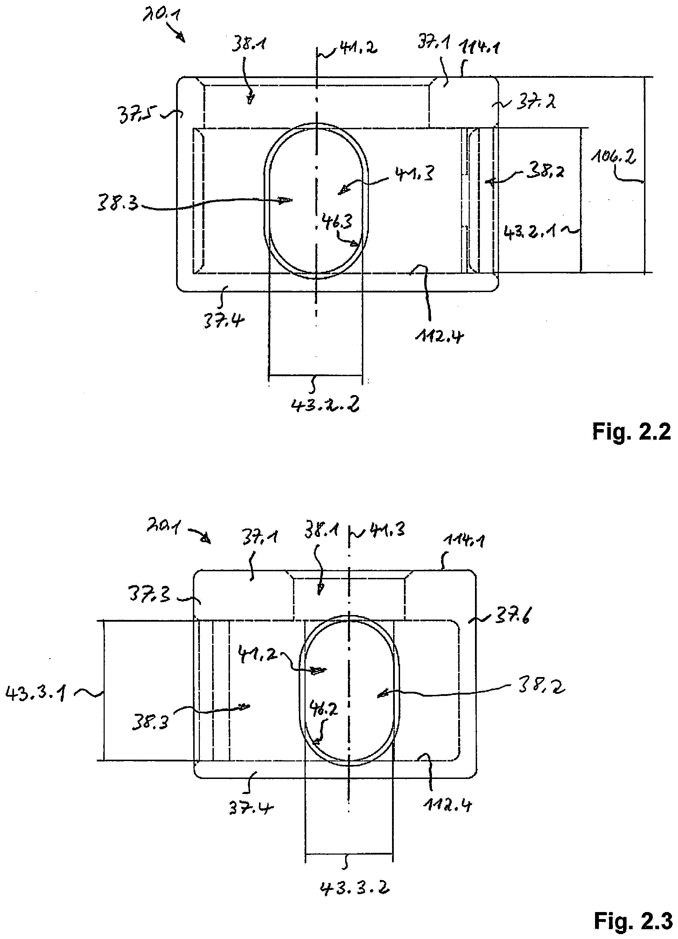

In den Figuren 2 und 2.1 bis 2.3 ist ein quaderförmiger Eck-Verbindungs-Hohlkörper 20.1 der quaderförmigen Eck-Verbindungs-Hohlkörper 20.1, 20.2 gemäß einer ersten Ausführungsvariante gezeigt, der in jeder Raumzelle 11.1, 11.2, 11.3, 11.4 verbaut ist. Auf die Unterschiede dieser ersten Ausführungsvariante gegenüber einer zweiten Ausführungsvariante der ebenfalls in jeder Raumzelle 11.1, 11.2, 11.3, 11.4 verbauten Eck-Verbindungs-Hohlkörper 20.2 wird weiter unten noch näher eingegangen. Nachfolgend werden zunächst diejenigen Merkmale beschrieben, die sowohl die Eck-Verbindungs-Hohlkörper 20.1, 20.2 gemäß der ersten Ausführungsvariante als auch die Eck-Verbindungs-Hohlkörper 20.der zweiten Ausführungsvariante aufweisen:
Jeder quaderförmige Eck-Verbindungs-Hohlkörper 20.1, 20.2 erstreckt sich in Richtung seiner zentralen Hohlkörper-Längsachse 35. Jeder quaderförmige Eck-Verbindungs-Hohlkörper 20.1, 20.2 weist einen Hohlraum 36 zur Aufnahme von Verbindungsmittel-Teilen auf. Dieser Hohlraum 36 wird von sechs Außenwandteilen 37.1, 37.2, 37.3, 37.4, 37.5, 37.6 begrenzt. Die Außenflächen der Außenwandteile von jeweils drei unmittelbar benachbarten Außenwandteilen der sechs Außenwandteile 37.1, 37.2, 37.3, 37.4, 37.5, 37.6 erstrecken sich im Wesentlichen senkrecht zueinander. Drei unmittelbar benachbarte Außenwandteile 37.1, 37.2, 37.3 der sechs Außenwandteile 37.1, 37.2, 37.3, 37.4, 37.5, 37.6 weisen jeweils eine Durchbrechung 38.1, 38.2, 38.3 auf, die jeweils in den Hohlraum 36 mündet. Dabei weisen ein erster Außenwandteil 37.1 eine in den Hohlraum 36 mündende erste Durchbrechung 38.1 auf, ein zweiter Außenwandteil 37.2 eine in den Hohlraum 36 mündende zweite Durchbrechung 38.2 auf und ein dritter Außenwandteil 37.3 eine in den Hohlraum 36 mündende dritte Durchbrechung 38.3 auf. Jede Durchbrechung 38.1, 38.2, 38.3 ist in einer Richtung von dem Hohlraum 36 weg nach außen offen. Jeder Außenwandteil 37.1, 37.2, 37.3, 37.4, 37.5, 37.6 weist eine rechteckförmige Gestalt auf. Es versteht sich jedoch, dass ein oder mehrere Außenwandteile auch eine quadratische Gestalt aufweisen können und/oder dass die Eck-Verbindungs-Hohlkörper würfelförmig gestaltet sein können. Vorzugsweise sind die Außenränder jedes Eck-Verbindungs-Hohlkörpers 37.1, 37.2, 37.3, 37.4, 37.5, 37.6 abgerundet oder abgeschrägt gestaltet.

In der gezeigten Einbau- bzw. Gebrauchsstellung erstreckt sich der erste Außenwandteil 37.1 in Richtung seiner horizontalen ersten Außenwand-Längsachse 39.1. Die erste Außenwand-Längsachse 39.1 erstreckt sich parallel zu der Hohlkörper-Längsachse 35. Der in der Einbau- bzw. Gebrauchsstellung seitliche zweite Außenwandteil 37.2 erstreckt sich in Richtung seiner horizontalen zweiten Außenwand-Längsachse 39.2. Die zweite Außenwand-Längsachse 39.2 erstreckt sich senkrecht zu der Hohlkörper-Längsachse 35. Der in der Einbau- bzw. Gebrauchsstellung seitliche dritte Außenwandteil 37.3 erstreckt sich in Richtung seiner horizontalen dritten Außenwand-Längsachse 39.3. Die dritte Außenwand-Längsachse 39.3 erstreckt sich parallel zu der Hohlkörper-Längsachse 35. Die erste Außenwand-Längsachse 39.1 und die dritte Außenwand-Längsachse 39.3 erstrecken sich parallel zueinander. Die zweite Außenwand-Längsachse 39.2 erstreckt sich senkrecht zu der ersten Außenwand-Längsachse 39.1 und senkrecht zu der dritten Außenwand-Längsachse 39.3.

Die besagten drei Durchbrechungen 38.1, 38.2, 38.3 sind jeweils als ein Langloch ausgebildet, das sich in Richtung einer Durchbrechungs-Längsachse 41.1, 41.2, 41.3 erstreckt. Bevorzugt weist jedes Langloch einen ovalen Öffnungsquerschnitt auf. Die erste Durchbrechung 38.1 ist als ein erstes Langloch ausgebildet, das bzw. die sich in Richtung einer ersten Durchbrechungs-Längsachse 41.1 erstreckt. Die zweite Durchbrechung 38.2 ist als ein zweites Langloch ausgebildet, das bzw. die sich in Richtung einer zweiten Durchbrechungs-Längsachse 41.2 erstreckt. Die dritte Durchbrechung 38.3 ist als ein drittes Langloch ausgebildet, das bzw. die sich in Richtung einer dritten Durchbrechungs-Längsachse 41.3 erstreckt. Die zweite Durchbrechungs-Längsachse 41.2 der zweiten Durchbrechung 38.2 und die dritte Durchbrechungs-Längsachse 41.3 der dritten Durchbrechung 38.3 erstrecken sich parallel zueinander. Die zweite Durchbrechungs-Längsachse 41.2 der zweiten Durchbrechung 38.2 und die dritte Durchbrechungs-Längsachse 41.3 der dritten Durchbrechung 38.3 erstrecken sich jeweils senkrecht zu der Hohlkörper-Längsachse 35. Die erste Durchbrechungs-Längsachse 41.1 der ersten Durchbrechung 38.1 erstreckt sich senkrecht zu der zweiten Durchbrechungs-Längsachse 41.2 der zweiten Durchbrechung 38.2 und erstreckt sich senkrecht zu der dritten Durchbrechungs-Längsachse 41.3 der dritten Durchbrechung 38.3. Die erste Durchbrechungs-Längsachse 41.1 der ersten Durchbrechung 38.1 erstreckt sich parallel zu der Hohlkörper-Längsachse 35.

Die Eck-Verbindungs-Hohlkörper 20.1, 20.2 jeder Raumzelle 11.1, 11.2, 11.3, 11.4 sind derart angeordnet, dass sich die jeweilige Hohlkörper-Längsachse 35 und die jeweilige erste Durchbrechungs-Längsachse 41.1, 41.2, 41.3 parallel zu der jeweiligen Raumzellen-Längsachse 21 erstrecken.

Die erste Durchbrechung 38.1 weist, in Richtung ihrer ersten Durchbrechungs-Längsachse 41.1 betrachtet, eine erste Durchbrechungs-Länge 43.1.1 und senkrecht dazu betrachtet eine erste Durchbrechungs-Breite 43.1.2 auf. Vorzugsweise beträgt die erste Durchbrechungs-Länge 43.1.1 etwa 124 mm. Vorzugsweise beträgt die erste Durchbrechungs-Breite 43.1.2 etwa 63,5 mm.

Die zweite Durchbrechung 38.2 weist, in Richtung ihrer Durchbrechungs-Längsachse 41.2 betrachtet, eine zweite Durchbrechungs-Länge 43.2.1 und senkrecht dazu betrachtet eine zweite Durchbrechungs-Breite 43.2.2 auf. Vorzugsweise beträgt die zweite Durchbrechungs-Länge 43.2.1 etwa 79,5 mm. Vorzugsweise beträgt die zweite Durchbrechungs-Breite 43.2.2 etwa 51 mm.

Die dritte Durchbrechung 38.3 weist, in Richtung ihrer Durchbrechungs-Längsachse 41.3 betrachtet, eine dritte Durchbrechungs-Länge 43.3.1 und senkrecht dazu betrachtet eine dritte Durchbrechungs-Breite 43.23.2 auf. Vorzugsweise beträgt die dritte Durchbrechungs-Länge 43.3.1 etwa 79,5 mm. Vorzugsweise beträgt die dritte Durchbrechungs-Breite 43.3.2 etwa 51 mm.

Vorzugsweise weisen die zweite Durchbrechung 38.2 und die dritte Durchbrechung 38.3 eine im Wesentlichen gleiche Innenkontur 46.1, 46.2 mit im Wesentlichen gleichen Abmessungen auf.

Die Außenabmessungen jedes Eck-Verbindungs-Hohlkörpers 20.1, 20.2 sind gleich. Mit anderen Worten gesagt weist jeder Eck-Verbindungs-Hohlkörper 20.1, 20.2 die gleichen Außenabmessungen auf. Die Eck-Verbindungs-Hohlkörper 20.1, 20.2 sind auch sonst gleich gestaltet, jedoch mit Ausnahme der Anordnung der dritten Durchbrechung 38.3.

Bei der ersten Ausführungsvariante jedes Eck-Verbindungs-Hohlkörpers 20.1 von vier Eck-Verbindungs-Hohlkörpern 20.1, 20.2 der acht Eck-Verbindungs-Hohlkörper 20.1, 20.2 jeder Raumzelle 11.1, 11.2, 11.3, 11.4 ist die dritte Durchbrechung 38.3, bei einer Anordnung des Eck-Verbindungs-Hohlkörpers 20.1 derart, dass seine erste Durchbrechung 38.1 nach oben offen ist, und bei einer Anordnung der zweiten Durchbrechung 38.2 in einer Richtung parallel zu der Hohlkörper-Längsachse 35 bzw. parallel zu der ersten Durchbrechungs-Längsachse 41.1 der ersten Durchbrechung 38.1, in dem dann linken dritten Außenwandteil 37.3 vorgesehen, wie in Figur 2 gezeigt.

Im Unterschied dazu ist bei der zweiten Ausführungsvariante jedes Eck-Verbindungs-Hohlkörpers 20.2 von vier anderen Eck-Verbindungs-Hohlkörpern 20.1, 20.2 der acht Eck-Verbindungs-Hohlkörper 20.1, 20.2 jeder Raumzelle 11.1, 11.2, 11.3, 11.4 die dritte Durchbrechung 38.3, bei einer Anordnung des Eck-Verbindungs-Hohlkörpers 20.2 derart, dass seine erste Durchbrechung 38.1 nach oben offen ist, und bei einer Betrachtung der zweiten Durchbrechung 38.2 in einer Richtung parallel zu der Hohlkörper-Längsachse 35 bzw. parallel zu der ersten Durchbrechungs-Längsachse 41.1 der ersten Durchbrechung 38.1, in dem dann rechten dritten Außenwandteil 37.3 vorgesehen.

Bei dem zweiten Eck-Verbindungs-Hohlkörper 20.2 gemäß der zweiten Ausführungsvariante ist im Unterschied zu dem ersten Eck-Verbindungs-Hohlkörper 20.1 gemäß der ersten Ausführungsvariante die dritte Durchbrechung 38.3 bezüglich einer gedachten Ebene, die durch die erste Durchbrechungs-Längsachse 41.1 der ersten Durchbrechung 38.1 und durch die zweite Durchbrechungs-Längsachse 41.2 der zweiten Durchbrechung 38.2 aufgespannt ist, an vertauschten bzw. gespiegelten Seiten angeordnet.

Bei einer Betrachtung der Raumzellen 11.1, 11.2, 11.3, 11.4 der Raumzellen-Anordnung 10 gemäß Figur 1 von links, also in einer Richtung parallel zu den Raumzellen-Längsachsen 21, sind bei jeder Raumzelle 11.1, 11.2, 11.3, 11.4 die Eck-Verbindungs-Hohlkörper 20.1, 20.1 derart angeordnet, dass es sich bei dem jeweils links oben und rechts unten angeordneten Eck-Verbindungs-Hohlkörper jeweils um einen Eck-Verbindungs-Hohlkörper 20.1 gemäß der in Figur 2 gezeigten ersten Ausführungsvariante handelt, während es sich bei dem jeweils rechts oben und links unten angeordneten Eck-Verbindungs-Hohlkörper 20.2 um einen Eck-Verbindungs-Hohlkörper gemäß der zweiten Ausführungsvariante handelt. Die einer gemeinsamen schmalen Stirnseite 47.1 einer jeden Raumzelle 11.1, 11.2, 11.3, 11.4 zugeordneten beiden Eck-Verbindungs-Hohlkörper 20.1 gemäß der ersten Ausführungsvariante sind also diagonal gegenüberliegend angeordnet und auch die derselben gemeinsamen schmalen Stirnseite 47.1 zugeordneten Eck-Verbindungs-Hohlkörper 20.2 gemäß der zweiten Ausführungsvariante sind diagonal gegenüberliegend angeordnet.

Bei jeder Raumzelle 11.1, 11.2, 11.3, 11.4 sind die jeweiligen vier jeweils einer gemeinsamen schmalen Stirnseite 47.1 der beiden schmalen Stirnseiten zugeordneten Eck-Verbindungs-Hohlkörper 20.1, 20.2 derart eingebaut, dass ihre zweite Durchbrechung 38.2 jeweils auf dieser Stirnseite 47.1 angeordnet sind, also zu der gemeinsamen Stirnseite 47.1 hin nach außen offen sind. Bei jeder Raumzelle 11.1, 11.2, 11.3, 11.4 sind die jeweiligen beiden jeweils einer gemeinsamen schmalen Stirnseite 47.1 zugeordneten, jeweils diagonal gegenüberliegenden Eck-Verbindungs-Hohlkörper 20.1, 20.2, sowohl der ersten Ausführungsvariante als auch der zweiten Ausführungsvariante, jeweils derart angeordnet, dass der eine Eck-Verbindungs-Hohlkörper 20.1 bzw. 20.2 gegenüber dem diagonal gegenüberliegend angeordneten anderen Eck-Verbindungs-Hohlkörper 20.1 bzw. 20.2 der gleichen Ausführungsvariante um 180 Grad um seine Hohlkörper-Längsachse 35 gedreht eingebaut ist. Am Beispiel der Eck-Verbindungs-Hohlkörper 20.1 gemäß der ersten Ausführungsvariante bedeutet dies, dass der jeweils links oben angeordnete Eck-Verbindungs-Hohlkörper in der in Figur 2 gezeigten Lage angeordnet ist, also derart, dass seine dritte Durchbrechung 38.3 in dem dritten Außenwandteil 37.3 links und seine erste Durchbrechung 38.1 in dem ersten Außenwandteil 37.1 oben angeordnet ist, während der diagonal gegenüberliegend rechts unten an derselben schmalen Stirnseite 47.1 angeordnete Eck-Verbindungs-Hohlkörper 20.1 derselben ersten Ausführungsvariante derart angeordnet ist, dass seine dritte Öffnung 38.3 in dem dritten Außenwandteil 37.3 rechts und seine erste Durchbrechung 38.1 in dem ersten Außenwandteil 37.1 unten angeordnet ist. Am Beispiel der Eck-Verbindungs-Hohlkörper 20.2 gemäß der zweiten Ausführungsvariante bedeutet dies, dass der jeweils rechts oben angeordnete Eck-Verbindungs-Hohlkörper 20.2 derart angeordnet ist, dass seine dritte Durchbrechung 38.3 in dem dritten Außenwandteil 37.3 rechts und seine erste Durchbrechung 38.1 in dem ersten Außenwandteil 37.1 oben angeordnet ist, während der diagonal gegenüberliegend links unten an derselben schmalen Stirnseite 47.1 angeordnete Eck-Verbindungs-Hohlkörper 20.2 derselben zweiten Ausführungsvariante derart angeordnet ist, dass seine dritte Durchbrechung 38.3 in dem dritten Außenwandteil 37.3 links und seine erste Durchbrechung 38.1 in dem ersten Außenwandteil 37.1 unten angeordnet ist.

Durch die auf diese Art und Weise angeordneten Eck-Verbindungs-Hohlkörper 20.1, 20.2 der ersten Ausführungsvariante und der zweiten Ausführungsvariante wird erreicht, dass bei allen vier oberen Eck-Verbindungs-Hohlkörpern 20.1, 20.2 jeder Raumzelle 11.1, 11.2, 11.3, 11.4 die jeweilige erste Durchbrechung 38.1 auf der gleichen oberen Seite angeordnet ist und dass bei allen vier unteren Eck-Verbindungs-Hohlkörpern 20.1, 20.2 jeder Raumzelle 11.1, 11.2, 11.3, 11.4 die jeweilige erste Durchbrechung 38.1 auf der gleichen unteren Seite angeordnet ist, die von der besagten oberen Seite in eine entgegengesetzte Richtung weg weist. Wenn also beispielhaft, wie in Figur 1 gezeigt, die dort links oben gezeigte obere Raumzelle 11.2 auf die dort links unten gezeigte untere Raumzelle 11.1 derart aufgesetzt ist, dass ihre jeweiligen vier Vertikalseiten zueinander fluchtend angeordnet sind, dann liegt den jeweils nach oben offenen ersten Durchbrechungen 38.1 der oberen Eck-Verbindungs-Hohlkörper 20.1, 20.2 der unteren Raumzelle 11.1 jeweils eine nach unten offene erste Durchbrechung 38.1 der vier unteren Eck-Verbindungs-Hohlkörper 20.1, 20.2 der oberen Raumzelle 11.2 gegenüber. Zugleich wird durch die auf die vorstehend beschriebene Art und Weise angeordneten Eck-Verbindungs-Hohlkörper 20.1, 20.2 der ersten und zweiten Ausführungsvariante erreicht, dass die jeweilige dritte Durchbrechung 38.3 der vier jeweils einer Längsseite (lange Stirnseite) 47.2 einer jeden Raumzelle 11.1, 11.2, 11.3, 11.4 zugeordneten Eck-Verbindungs-Hohlkörper 20.1, 20.2 auf eben dieser Längsseite 47.2 angeordnet und zu dieser Längsseite 47.2 hin offen ist. Wenn also, wie beispielhaft in Figur 1 gezeigt, horizontal neben die dort links unten gezeigte unter Raumzelle 11.1 eine entsprechende untere Raumzelle 11.3 in einer gleichen Höhe derart aufgestellt ist, dass diese beiden unteren Raumzellen 11.1, 11.3 an ihren schmalen Stirnseiten 47.1 miteinander fluchten, dann liegt jeder dritten Durchbrechung 38.3 der vier Eck-Verbindungs-Hohlkörper 20.1, 20.2 der einen unteren Raumzelle 11.1 eine dritte Durchbrechung 38.3 des jeweiligen Eck-Verbindungs-Hohlkörpers 20.1, 20.2 der zugeordneten vier Eckverbindungs-Hohlkörper 20.1, 20.2 der anderen unteren Raumzelle 11.3 gegenüber. Für die beiden oberen Raumzellen 11.1, 11.4 gilt Entsprechendes.

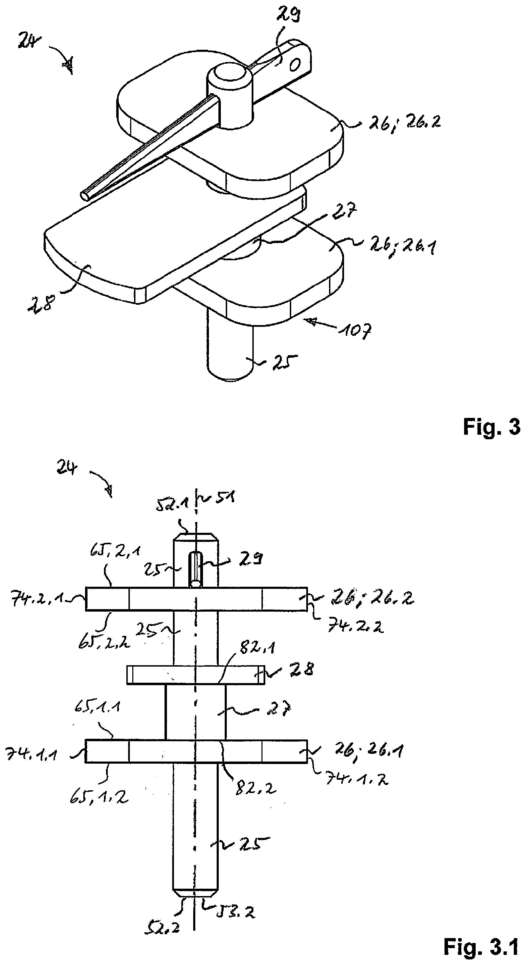

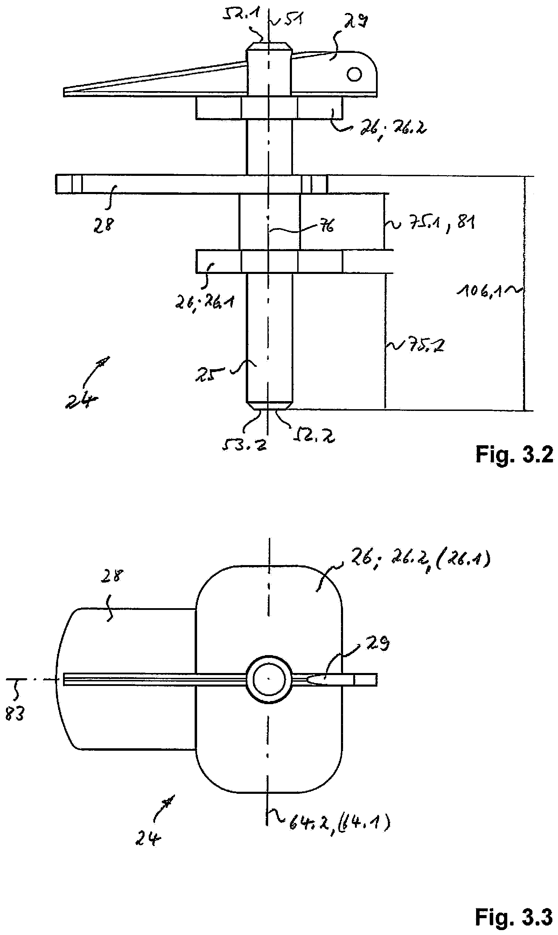

In Figur 3 ist ein erfindungsgemäßes Vertikal-Verbindungsmittel 24 in einer perspektivischen Zusammenbau-Darstellung gezeigt. In den Figuren 3.1 und 3.2 sind zwei zueinander senkrechte Seitenansichten und in Figur 3.3 ist eine Draufsicht des Vertikal-Verbindungsmittels 24 gemäß Figur 3 gezeigt. Jede der in Figur 1 gezeigten unteren Raumzellen 11.1, 11.3 ist mittels jeweils vier derartigen Vertikal-Verbindungsmitteln 24 vertikal mit der jeweils darauf angeordneten oberen Raumzelle 11.1, 11.4 wieder lösbar verbunden.

Jedes Vertikal-Verbindungsmittel 24 umfasst im zusammengebauten Zustand als wesentliche Bauteile einen, vorzugsweise langgestreckten, Verbindungskörper 25, einen ersten, in der Einbaustellung unteren, ersten Befestigungskörper 26.1, einen Abstandvermittlungskörper 27, einen Stützkörper 28, einen, in der Einbaustellung oberen, zweiten Befestigungskörper 26.2 und einen Keil 29.

Der erste Befestigungskörper 26.1 ist unlösbar, vorzugsweise durch Schweißen, mit dem Verbindungskörper 25 verbunden. Der Abstandsvermittlungskörper 27, der Stützkörper 28, der zweite Befestigungskörper 26.2 und der Keil 29 sind mit dem Verbindungskörper 25 jeweils lösbar verbunden. Der Abstandvermittlungskörper 27, der Stützkörper 28 und der zweite Befestigungskörper 26.2 sind jeweils relativ zu dem Verbindungskörper 25 entlang dessen Verbindungskörper-Längsachse 51 verschiebbar und auch um die Verbindungskörper-Längsachse 51 drehbar an dem Verbindungskörper 25 befestigt.

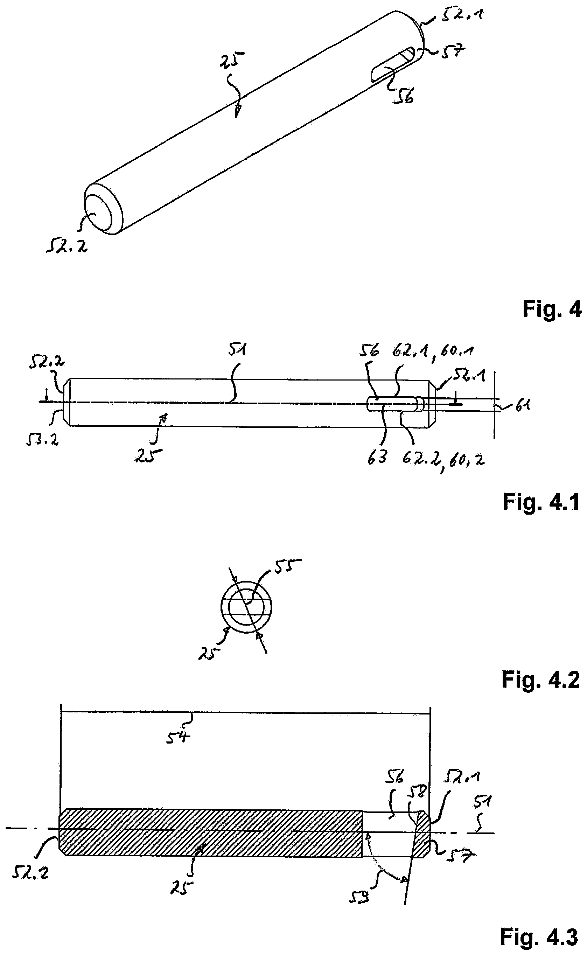

Der Verbindungskörper 25 erstreckt sich zwischen einem, in der Einbaustellung oberen, freien, ersten Verbindungskörper-Ende 52.1 und einem, in der Einbaustellung unteren, freien, zweiten Verbindungskörper-Ende 52.2 geradlinig entlang seiner Verbindungskörper-Längsachse 51. Bei dem Verbindungskörper 25 handelt es sich um einen kreiszylindrischen Bolzen. Dieser ist als Einzelteil in den Figuren 4, 4.1, 4.2 und 4.3 gezeigt. Der Bolzen 25 weist ein in der Einbaustellung oberes, freies, erstes Bolzen-Ende 52.1 auf und weist ein in der Einbaustellung unteres, freies, zweites Bolzen-Ende 52.2 auf. Bei dem ersten Bolzen-Ende 52.1 handelt es sich um das erste Verbindungskörper-Ende und bei dem zweiten Bolzen-Ende 52.2 handelt es sich um das zweite Verbindungskörper-Ende. Das erste Bolzen-Ende 52.1 und das zweite Bolzen-Ende 52.2 ist jeweils abgeflacht gestaltet. Das zweite Bolzen-Ende 52.2 weist in seinem abgeflachten Bereich eine kreisförmige ebene Aufstandsfläche 53 auf. Der Bolzen 25 weist im Wesentlichen über seine gesamte Bolzen-Länge 54, mit Ausnahme von, vorzugsweise als Ring-Fasen gestalteten, Übergangsbereichen an seinen beiden Bolzen-Enden 52.1, 52.2, durchgehend einen Bolzen-Außendurchmesser 55 auf. Vorzugsweise beträgt der Bolzen-Außendurchmesser 55 etwa 20 mm. Der Bolzen 25 weist im Bereich seines ersten Bolzen-Endes 52.1 eine Durchbrechung 56 in Form eines Keilaufnahme-Schlitzes für den Keil 29 auf. Der Keilaufnahme-Schlitz 56 ist in Richtung zu dem ersten Bolzen-Ende 52.1 hin mit einem Keil-Anlagekörper 57 für den Keil 29 begrenzt. Der Keil-Anlagekörper 57 weist eine Anlage-Schrägfläche 58 für den Keil 29 auf. Die Anlage-Schrägfläche 58 schließt mit der Verbindungskörper-Längsachse 51 einen spitzen Winkel 59 ein, also einen Winkel ein, der kleiner ist als 90 Grad. Vorzugsweise beträgt der Winkel 59 etwa 81 Grad. Der Keilaufnahme-Schlitz 56 weist zwei sich parallel zu der Verbindungskörper-Längsachse erstreckende Schlitzwände 60.1, 60.2 auf. Die parallelen Schlitzwände 60.1, 60.2 weisen einen Querabstand 61 zueinander auf. Vorzugsweise beträgt der Querabstand 61 etwa 6 mm. Der Querabstand 61 ist geringfügig größer als sich voneinander weg erstreckende seitliche Keil-Führungsflächen 62.1, 62.2 des Keils 29. Die parallelen Schlitzwände 60.1, 60.2 erstrecken sich parallel zu einer Schlitz-Mittelebene 63. Eine Projektion der Schlitz-Mittelebene 63 in einer Richtung parallel zu der Verbindungskörper-Längsachse 51 in eine senkrecht zu der Verbindungskörper-Längsachse 51 verlaufende gedachte Ebene ergibt eine gedachte Schnittlinie, die sich in einer Querrichtung senkrecht zu der Verbindungskörper-Längsachse 51 erstreckt.

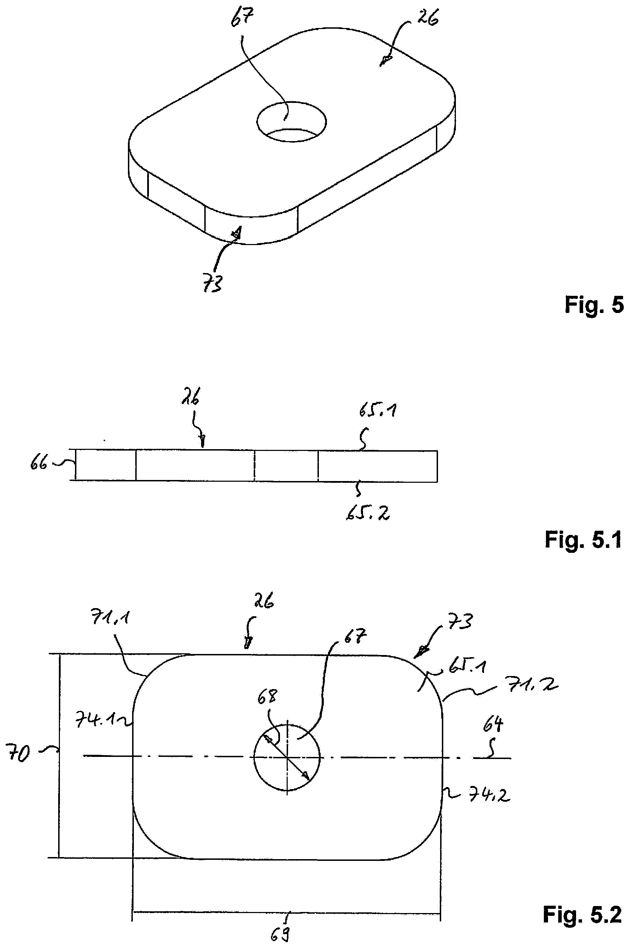

In den Figuren 5, 5.1 und 5.2 ist beispielshaft ein Befestigungskörper 26 der beiden Befestigungskörper 26.1, 26.2 gezeigt. Der erste Befestigungskörper 26.1 und der zweite Befestigungskörper 26.2 sind als Einzelteile gleich gestaltet. Es versteht sich jedoch, dass er erste Befestigungskörper 26.1 und der zweite Befestigungskörper 26.2 auch unterschiedlich gestaltet sein können.

Bei dem jeweiligen Befestigungskörper 26 handelt es sich um eine flache Platte. Jeder Befestigungskörper 26; 26.1, 26.2 erstreckt sich in einer Befestigungskörper-Längsrichtung bzw. in Richtung seiner Befestigungskörper-Längsachse 64.1, 64.2. Jeder Befestigungskörper 26; 26.1, 26.2 weist zwei ebene Befestigungskörper-Hauptflächen 65.1; 65.1.1, 65.1.2; 65.2; 65.2.1, 65.2.1 auf, die sich parallel und in einem Befestigungskörper-Hauptflächen-Abstand 66 zueinander sowie in entgegengesetzte Richtungen voneinander weg erstrecken. Jeder Befestigungskörper 26; 26.1, 26.2 weist im Wesentlichen durchgehend eine Befestigungskörper-Dicke 66 auf. Letztere entspricht dem Befestigungskörper-Hauptflächen-Abstand. Vorzugsweise beträgt die Befestigungskörper-Dicke etwa 10 mm. Jeder Befestigungskörper 26; 26.1, 26.2 weist eine zentrale Durchbrechung 67 in Form einer kreiszylindrischen Befestigungskörper-Bohrung auf. Die Befestigungskörper-Bohrung 67 streckt sich in einer Befestigungskörper-Bohrungsrichtung senkrecht zu den beiden Befestigungskörper-Hauptflächen 65.1; 65.1.1, 65.1.2; 65.2; 65.2.1, 65.2.1. Der Innendurchmesser 68 der jeweiligen Befestigungskörper-Bohrung 67 ist geringfügig größer als der Verbindungskörper-Außendurchmesser 55 des Verbindungskörpers 25 (Bolzens). Vorzugsweise beträgt der Innendurchmesser 68 der jeweiligen Befestigungskörper-Bohrung etwa 21 mm. Jeder Befestigungskörper 26; 26.1, 26.2 weist eine Befestigungskörper-Länge 69 und eine Befestigungskörper-Breite 70 auf, die kleiner ist als die Befestigungskörper-Länge 69. Vorzugsweise beträgt die Befestigungskörper-Länge 69 etwa 100 mm. Vorzugsweise beträgt die Befestigungskörper-Breite 70 etwa 65 mm. Die stirnseitigen Ränder 71.1, 71.2 jedes Befestigungskörpers 26; 26.1, 26.2 sind abgerundet gestaltet. Dadurch weist jeder Befestigungskörper 26; 26.1, 26.2 eine ovale Außenkontur 73 auf (siehe Figur 5.2).

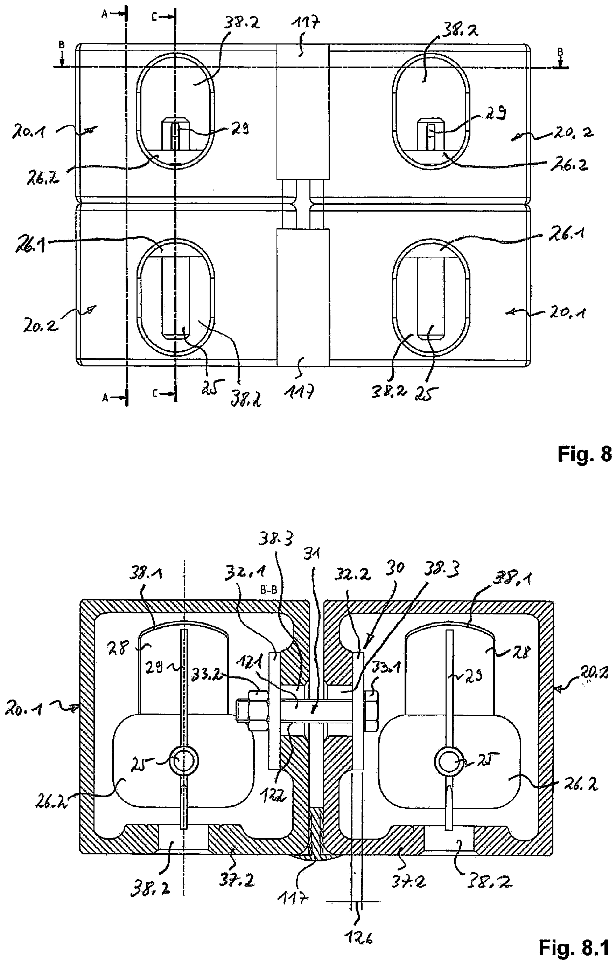

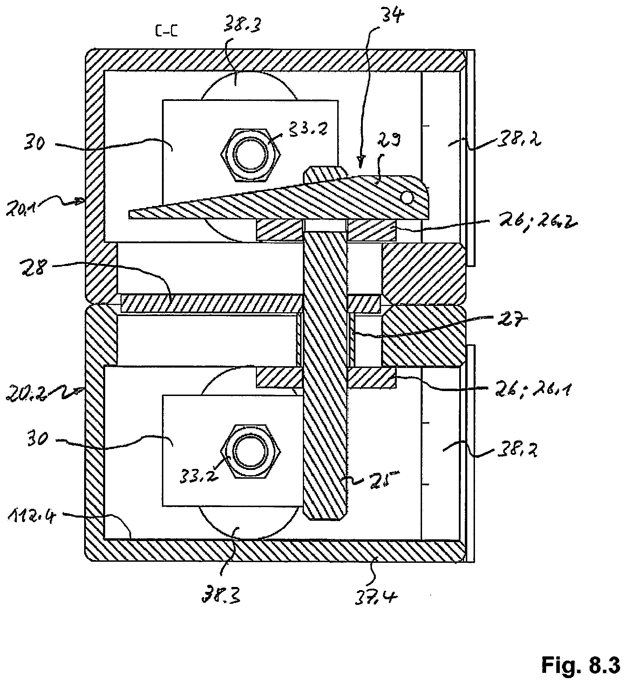

Bei dem in den Figuren 3, 3.1, 3.2 und 8.3 gezeigten Abstandsvermittlungskörper 27 handelt es sich um eine kreiszylindrische Hülse. Die Hülse 27 weist in einem senkrecht zu ihrer Hülsen-Längsachse 81 verlaufenden Querschnitt einen KreisRing-Querschnitt auf. Die Hülse 27 weist einen Hülsen-Innendurchmesser, einen Hülsen-Außendurchmesser, eine Hülsen-Dicke und eine Hülsen-Länge 81 auf. Der Hülsen-Innendurchmesser ist geringfügig größer als der Verbindungskörper-Außendurchmesser 55. Vorzugsweise beträgt der Hülsen-Innendurchmesser etwa 23 mm. Vorzugsweise beträgt der Hülsen-Außendurchmesser etwa 27 mm. In diesem Fall beträgt die Hülsen-Dicke vorzugsweise etwa 2 mm. Vorzugsweise beträgt die Hülsen-Länge 81 etwa 25 mm.

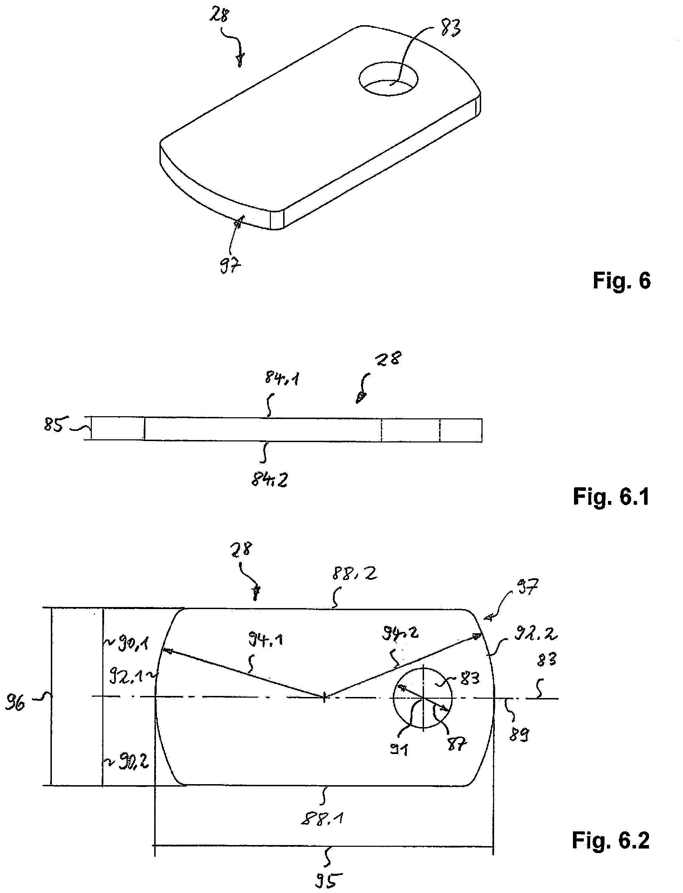

In den Figuren 6, 6.1 und 6.2 ist der Stützkörper 28 gezeigt. Bei dem Stützkörper 28 handelt es sich um eine flache Platte. Der Stützkörper 28 erstreckt sich in einer Stützkörper-Längsrichtung bzw. in Richtung seiner Stützkörper-Längsachse 83. Der Stützkörper 28 weist zwei ebene Stützkörper-Hauptflächen 84.1, 84.2 auf, die sich parallel und in einem Stützkörper-Hauptflächen-Abstand 85 zueinander sowie in entgegengesetzte Richtungen voneinander weg erstrecken. Der Stützkörper 28 weist im Wesentlichen durchgehend eine Stützkörper-Dicke 85 auf. Letztere entspricht dem Stützkörper-Hauptflächen-Abstand. Der Stützkörper-Hauptflächen-Abstand 85 bzw. die Stützkörper-Dicke ist kleiner als der Befestigungskörper-Hauptflächen-Abstand 66 bzw. kleiner als die Befestigungskörper-Dicke. Vorzugsweise beträgt die Stützkörper-Dicke 85 etwa 8 mm. Der Stützkörper 28 weist eine Stützkörper-Durchbrechung 86 in Form einer kreiszylindrischen Stützkörper-Bohrung auf. Die Stützkörper-Bohrung 86 streckt sich in einer Bohrungsrichtung senkrecht zu den beiden Stützkörper-Hauptflächen 84.1, 84.2. Der Stützkörper-Innendurchmesser 87 der Stützkörper-Bohrung 86 ist geringfügig größer als der Verbindungskörper-Außendurchmesser 55 des Verbindungskörpers 25 (Bolzens). Vorzugsweise beträgt der Stützkörper-Innendurchmesser 87 der Stützkörper-Bohrung 86 etwa 21 mm.

Der Stützkörper 28 weist sich parallel zu der Stützkörper-Längsachse 83 erstreckende parallele Längs-Stirnflächen 88.1, 88.2 auf. Der Stützkörper 28 ist symmetrisch zu einer Längs-Mittelebene 89 gestaltet. Die Längs-Mittelebene 89 weist von jeder Längs-Stirnfläche 88.1, 88.2 einen gleich großen Abstand 90.1 auf. Vorzugsweise beträgt dieser Abstand 90.1 etwa 31 mm. Die kreiszylindrische Stützkörper-Bohrung 86 ist derart angeordnet, dass ihr Mittelpunkt 91 auf der Längs-Mittelebene 89 liegt. Die Stützkörper-86 Bohrung ist im Übrigen bezüglich der beiden konvex abgerundeten Quer-Stirnseiten 92.1, 92.2 des Stützkörpers 28 und in der Stützkörper-Längsrichtung betrachtet, außermittig angeordnet. Der Mittelpunkt 91 der Stützkörper-Bohrung 86 weist von einer seiner Quer-Stirnseiten 92.2 einen, vorzugsweise 25,5 mm betragenden, Abstand 90.2 auf. Die beiden Quer-Stirnflächen 92.1, 92.2 sind mit einem, vorzugsweise etwa 61 mm betragenden, Radius gerundet. Vorzugsweise sind die Übergänge der Quer-Stirnseiten 92.1, 92.2 zu den parallelen Längs-Stirnseiten 88.1, 88.2 jeweils mit einem, vorzugsweise etwa 5 mm, betragenden Radius abgerundet. Jeder Stützkörper 28 weist eine Stützkörper-Länge 95 und eine Stützkörper-Breite 96 auf, die kleiner ist als die Stützkörper-Länge 95. Die Stützkörper-Länge 95 ist größer als die Befestigungskörper-Länge 69 . Vorzugsweise beträgt die Stützkörper-Länge 95 etwa 121 mm. Vorzugsweise beträgt die Stützkörper-Breite 96 etwa 62 mm. Die stirnseitigen Ränder 92.1, 92.2 des Stützkörpers 28 sind abgerundet gestaltet. Dadurch weist jeder Stützkörper 28 eine ovale Außenkontur 97 auf (siehe Figur 6.2).

Die Form der Außenkontur 97 des Stützkörpers 28 entspricht im Wesentlichen der Form der ersten Innenkontur 46.1 der ersten Durchbrechung 38.1 jedes Eck-Verbindungs-Hohlkörpers 20.1, 20.2. Die Außenkontur 97 des Stützkörpers 28, einschließlich dessen Stützkörper-Länge 95 und dessen Stützkörper-Breite 96 sind derart auf die erste Innenkontur 46.1 der ersten Durchbrechung 38.1, einschließlich deren ersten Durchbrechungs-Länge 43.1.1 und deren ersten Durchbrechungs-Breite 43.1.2 abgestimmt gestaltet, dass der auf dem Verbindungskörper 28 über seine Stützkörper-Bohrung 86 aufgesteckte Stützkörper 28 von außen senkrecht, insbesondere lotrecht, klemmfrei so weit in die erste Durchbrechung 38.1 eingesteckt werden kann, dass er dort mit einem nur geringem seitlichen Umfangsspiel gehalten wird. Dadurch wird ein seitliches Verkippen des vormontierten Vertikal-Verbindungsmittels 24 minimiert und eine sichere Montage einer oberen Raumzelle auf einer unteren Raumzelle ermöglicht.

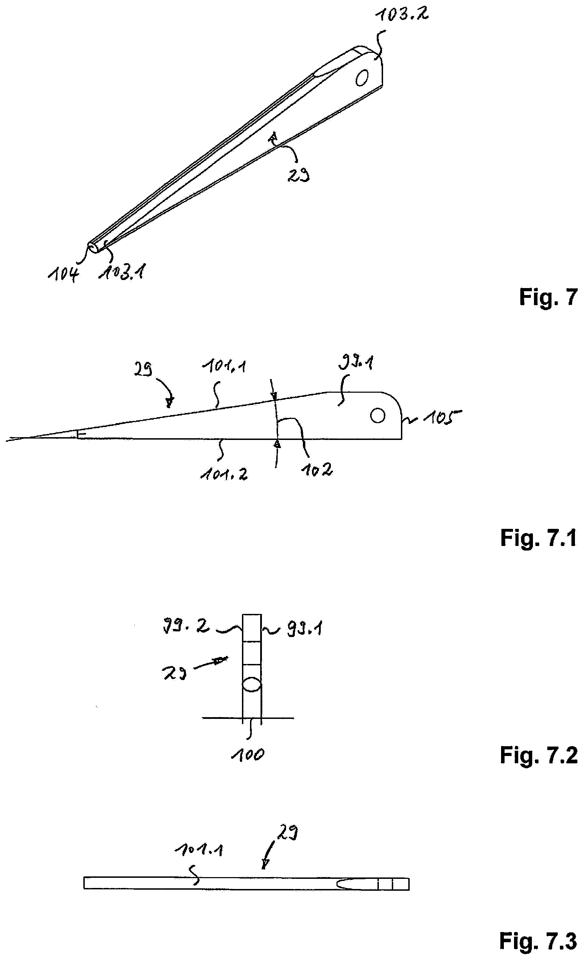

In den Figuren 7, 7.1, 7.2, 7.3 und 7.3 ist der auch als Austreiber bezeichenbare Keil 29 gezeigt. Der Keil 29 weist zwei sich in entgegengesetzte Richtungen voneinander weg erstreckende, seitliche, parallele Keil-Führungsflächen 99.1, 99.2 auf. Diese weisen einen der Keil-Dicke entsprechenden Führungsflächen-Abstand 100 zueinander auf. Vorzugseise beträgt die Keil-Dicke bzw. der Führungsflächen-Abstand 100 etwa 5 mm. Der Keil 29 weist senkrecht zu den Keil-Führungsflächen 99.1, 99.2 eine, in seiner Einbaustellung obere, erste Keilfläche 101.1 und eine davon wegweisende, in der Einbaustellung untere, zweite Keilfläche 101.2 auf. Die erste Keilfläche 101.1 und die zweite Keilfläche 101.2 schließen einen Keil-Winkel 102 ein. Vorzugsweise beträgt der Keil-Winkel 102 etwa 9 Grad. Der Keil 29 weist an einem ersten Keilende 103.1 eine Keilspitze 104 und an einem von dem ersten Keilende 103.1 wegweisenden zweiten Keilende 103.2 eine, vorzugsweise als Hammerschlag-Fläche ausgebildete, Eintreib-Fläche 105 auf.

Nachfolgend wirr die Anordnung und Befestigung der vorstehend einzelnen beschriebenen Bauteile des Vertikal-Verbindungsmittels 24 in dem fertig zusammenmontierten Vertikal-Verbindungsmittel 24 beschrieben, das in den Figuren 3, 3.2 und 3.3 gezeigt ist:
Der auf den Verbindungskörper 25 (Bolzen) über seine erste Befestigungskörper-Bohrung 67 aufgesteckte erste Befestigungskörper 26.1 ist in einem zweiten Längsabstand 106.2 zu dem, in der Einbaustellung unteren, zweiten Verbindungskörper-Ende 52.2 (Bolzen-Ende) an dem Verbindungskörper 25 (Bolzen) unlösbar, vorzugsweise durch Schweißen, befestigt. Dadurch ist ein Vormontagekörper 107 geschaffen, der aus dem Verbindungskörper 25 und dem ersten Befestigungskörper 26.1 besteht. Die erste Befestigungskörper-Längsachse 64.1 des ersten Befestigungskörpers 26.1 bzw. die beiden parallelen Hauptflächen 65.1.1, 65.1.2 des ersten Befestigungskörpers 26.1 erstreckt bzw. erstrecken sich senkrecht zu der Verbindungskörper-Längsachse 51 (Bolzen-Längsachse) des Verbindungskörpers 25 (Bolzens).

Auf das erste, in der Einbaustellung obere Verbindungskörper-Ende 52.1 (Bolzen-Ende) des Verbindungskörpers 25 (Bolzen) wird bzw. ist der Abstandsvermittlungskörper 27 (Hülse) derart aufgesteckt, dass er an der zu dem, in der Einbaustellung oberen, ersten Verbindungskörper-Ende 52.1 (Bolzen-Ende) weisenden, in der Einbaustellung oberen, ersten Hauptfläche 65.1.1 des ersten Befestigungskörpers 26.1 anliegt. Die Stützköper-Längsachse 83 bzw. die beiden parallelen Hauptflächen 84.1, 84.2 des Stützkörpers 28 erstreckt bzw. erstrecken sich senkrecht oder annähernd senkrecht zu der Verbindungskörper-Längsachse 51.

Auf das erste, in der Einbaustellung obere, Verbindungskörper-Ende 52.1 (Bolzen-Ende) des Verbindungskörpers 25 (Bolzen) wird bzw. ist der zweite Befestigungskörper 26.2 mit seiner zweiten Befestigungskörper-Bohrung 67 aufgesteckt, und zwar so weit, dass er ein Einstecken des Keils 29 mit seiner Keilspitze 104 voran in den Keil-Aufnahmeschlitz 56 des Verbindungskörpers 25 (Bolzens) ermöglicht. Die zweite Befestigungskörper-Längsachse 64.2 bzw. die beiden parallelen Hauptflächen 65.2.1, 65.2.2 des zweiten Befestigungskörpers 26.2 erstreckt bzw. erstrecken sich senkrecht zu der Verbindungskörper-Längsachse 51 (Bolzen-Längsachse) des Verbindungskörpers 25 (Bolzens).

Schließlich wird bzw. ist der Keil 29 mit seiner Keilspitze 104 voran in den Keil-Aufnahmeschlitz 56 eingesteckt.

Nachfolgend wird die Montage des Vertikal-Verbindungsmittels 24 zur vertikalen Verbindung durch Verspannung von jeweils zwei übereinander angeordneten Eck-Verbindungs-Hohlkörpern 20.1, 20.2 der übereinander angeordneten Raumzellen 11.1, 11.2; 11.3, 11.4 am Beispiel der in Figur 1 links außen gezeigten Raumzellen, also der unteren Raumzelle 11.1 und der oberen Raumzelle 11.2 beschrieben:
Zunächst wird die erste untere Raumzelle 11.1 derart aufgestellt, dass ihr Boden-Rahmen 16 auf einem Untergrund oder Träger zu liegen kommt und die Steher 15 vertikal bzw. lotrecht stehen. Gegebenenfalls werden dazu ein oder mehrere Höhenausgleichsmittel zwischen dem Untergrund oder Träger und der ersten unteren Raumzelle angebracht.

Anschließend wird jeweils in die erste Durchbrechung 38.1 des jeweiligen oberen Eck-Verbindungs-Hohlkörpers 20.1, 20.2 der unteren Raumzelle 11.1 der jeweilige, aus dem Verbindungskörper 25 und dem ersten Befestigungskörper 26.1 bestehende, Vormontagekörper 107 mit seinem zweiten Verbindungskörper-Ende (Bolzen-Ende) 52.2 voran eingesteckt, bis das zweite Verbindungskörper-Ende 52.2 (Bolzen-Ende) auf einer unteren (vierten) Innenfläche 112 des unteren (vierte) Außenwandteils 37.4 des jeweiligen oberen Eck-Verbindungs-Hohlkörpers 20.1, 20.2 der unteren Raumzelle 11.1 anliegt. Zu diesem Zwecke wird vor oder während des vertikalen, insbesondere lotrechten, Einsteckens des Verbindungskörpers 25 (Bolzens) von oben in die erste Durchbrechung 38.1, der Vormontagekörper 107 soweit um die Verbindungskörper-Längsachse 51 (Bolzen-Längsachse) gedreht, dass der erste Befestigungskörper 26.1 in die erste Durchbrechung 38.1 eingesteckt werden kann. Daraufhin wird der Vormontagekörper 107 weiter mit seinem zweiten Verbindungskörper-Ende 52.2 (Bolzen-Ende) voran eingesteckt, bis das zweite Verbindungskörper-Ende 52.2 (Bolzen-Ende) auf der besagten Innenfläche 112.4 des unteren Außenwandteils 37.4 des jeweiligen ersten oberen Eck-Verbindungs-Hohlkörpers 20.1, 20.2 der unteren Raumzelle 11.1 anliegt. Dann steht der Verbindungskörper 25 (Bolzen) mit seinem dann oberen, freien, ersten Verbindungskörper-Ende 52.1 (Bolzen-Ende) über die erste Außenseite 114.1 der ersten oberen Außenwand 37.1 des jeweiligen oberen Eck-Verbindungs-Hohlkörpers 20.1, 20.2 der unteren Raumzelle 11.1 vertikal, insbesondere annähernd lotrecht oder lotrecht, nach oben heraus.

Anschließend wird der der Abstandsvermittlungskörper 27 (Hülse) auf das freie erste Verbindungskörper-Ende 52.2 (Bolzen-Ende) des Verbindungskörpers 25 (Bolzens) aufgesteckt, bis dieser an der ersten Befestigungskörper-Hauptfläche 65.1.1 des ersten Befestigungskörpers 26.1 (Platte) anliegt. Es versteht sich, dass der Abstandsvermittlungskörper 27 (Hülse) auch schon vordem Einstecken des Vormontagekörpers 107 in die obere erste Durchbrechung 38.1 des jeweiligen oberen Eck-Verbindungs-Hohlkörpers 20.1, 20.2 entsprechend auf den Verbindungskörper 25 (Bolzen) aufgesteckt sein kann, wobei in diesem Fall die aus dem Vormontagekörper 107 und dem Abstandsvermittlungskörper 27 (Hülse) bestehende Baueinheit mit dem zweiten Verbindungskörper-Ende 52.2 (Bolzen-Ende) voran in die obere erste Durchbrechung 38.1 des jeweiligen oberen Eck-Verbindungs-Hohlkörpers 20.1, 20.2 eingesteckt werden kann.

Daraufhin wird der Stützkörper 28 über seine Stützkörper-Bohrung 86 auf das freie erste Verbindungskörper-Ende 52.1 (Bolzen-Ende) des Verbindungskörpers 25 (Bolzens) aufgesteckt, bis er an der in Richtung des freien ersten Verbindungskörper-Endes 52.1 (Bolzen-Endes) des Verbindungskörpers 25 (Bolzens) weisenden oberen ersten Ring-Stirnfläche 82.1 des Abstandsvermittlungskörpers 27 (Hülse) aufliegt. Dazu wird der auf den Verbindungskörper 25 (Bolzen) aufgesteckte Stützkörper 28, falls er sich nicht eh schon in der richtigen Einsteckstellung befindet, so lange um die Verbindungskörper-Längsachse 51 (Bolzen-Längsachse) gedreht, bis er von oben in die obere erste Durchbrechung 38.1 des betroffenen oberen Eck-Verbindungs-Hohlkörpers 20.1, 20.2 der unteren Raumzelle 11.1 eingesteckt werden kann, also seine Einsteckstellung erreicht ist. Der in die Einsteckstellung überführte bzw. gedrehte Stützkörper 28 wird dann in und durch die obere erste Durchbrechung 38.1 des betroffenen oberen ersten Eck-Verbindungs-Hohlkörpers 20.1, 20.2 der unteren Raumzelle 11.1 eingesteckt, und zwar so weit, bis er auf der oberen ersten Ring-Stirnfläche 82.1 des Abstandsvermittlungskörpers 27 (Hülse) aufliegt. Dann befindet sich der Stützkörper 28 (Platte) in einer Vormontagestellung, in welcher er entweder unterhalb, oder bündig mit, der oberen ersten oberen Außenfläche bzw. Außenseite 114.1 des die obere erste Durchbrechung 38.1 aufweisenden oberen ersten Außenwandteils 37.1 des betroffenen oberen Eck-Verbindungs-Hohlkörpers der unteren Raumzelle 11.1 angeordnet ist, also nicht über diese erste obere Außenfläche bzw. Außenseite 114.1 des ersten Außenwandteils 37.1 nach oben heraus steht. Dies ist erfindungsgemäß dadurch erreicht, dass der (dritte) Längsabstand 106.1 zwischen dem zweiten Verbindungskörper-Ende 52.2 (Bolzen-Ende) des Verbindungskörpers 25 (Bolzens) und der ersten Hauptfläche 84.1 des Stützkörpers 28 gleich groß oder kleiner ist, wie ein (vierter) Längsabstand 106.4 zwischen der (vierten) Innenfläche 112.4 des dem ersten Außenwandteil 37.1 gegenüberliegenden unteren (vierten) Außenwandteils 37.4 des betroffenen oberen Eck-Verbindungs-Hohlkörpers 20.1, 20.2 der unteren Raumzelle 11.1 und der oberen ersten Außenfläche 114.1 des die obere erste Durchbrechung 38.1 aufweisenden oberen ersten Außenwandteils 37.1 des betroffenen oberen ersten Eck-Verbindungs-Körpers 20.1, 20.2 der unteren Raumzelle 11.1.

Außerdem ist der erste Befestigungskörper 26.1 (Platte) an dem Verbindungskörper 25 (Bolzen) in einem (zweiten) Längsabstand 75.2 von dem zweiten (unteren) Verbindungskörper-Ende 52.2 (Bolzen-Ende) des Verbindungskörpers 25 (Bolzens) angeordnet und der erste Befestigungskörper 26.1 (Platte) weist eine erste Befestigungskörper-Dicke 66 (Platten-Dicke) auf und der Abstandsvermittlungskörper 27 (Hülse) weist eine Abstandsvermittlungskörper-Länge 81 (Hülsen-Länge) auf und der Stützkörper 28 (Platte) weist eine Stützkörper-Dicke 85 (Platten-Dicke) auf, wobei erfindungsgemäß der besagte (zweite) Längsabstand 75.2, die erste Befestigungskörper-Dicke 66, die Abstandsvermittlungskörper-Länge 81 und die Stützkörper-Dicke 85 derart aufeinander abgestimmt gestaltet sind, dass in der besagten Vormontagestellung, in welcher sich der Verbindungskörper 25 (Bolzen) über sein zweites Verbindungskörper-Ende 52.2 (Bolzen-Ende) auf der besagten (vierten) Innenfläche 112.4 des dem ersten Außenwandteil 37.1 gegenüberliegenden unteren (vierten) Außenwandteils 37.4 des betroffenen Eck-Verbindungs-Hohlkörpers 20.1, 20.2 der unteren Raumzelle 11.1 abstützt, der Stützkörper 38 (Platte) nicht über den die obere erste Durchbrechung 38.1 aufweisenden oberen erste Außenwandteil 37.1 nach oben heraus steht und außerdem zumindest teilweise innerhalb der ersten Durchbrechungsränder 40.1 der oberen ersten Durchbrechung 38.1 angeordnet ist, so dass sich der Stützkörper 28 (Platte) in dieser Vormontagestellung seitlich an den Durchbrechungsrändern 40.1 der oberen ersten Durchbrechung 38.1 abstützen kann. In der besagten Vormontagestellung ragt also von dem Vertikal-Verbindungsmittel 24 ausschließlich der Verbindungskörper 25 (Bolzen) mit seinem oberen ersten Verbindungskörper-Ende 52.1 (Bolzen-Ende) über den oberen ersten Außenwandteil 37.1 des betroffenen oberen Eck-Verbindungs-Hohlkörpers 20.1, 20.2 der unteren Raumzelle 11.1 heraus.

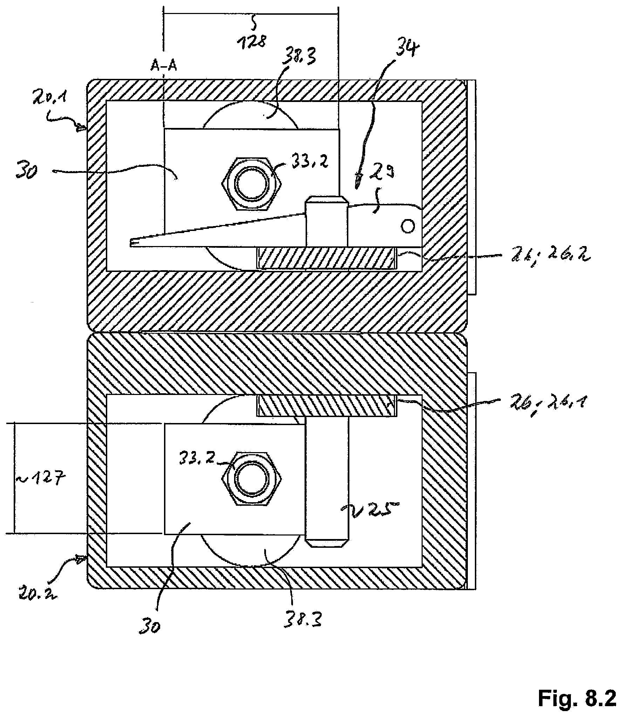

Nachdem auf diese Art und Weise in jede obere erste Durchbrechung 38.1 jedes ersten oberen Eck-Verbindungs-Hohlkörpers 20.1, 20.2 der vier ersten oberen Eck-Verbindungs-Hohlkörper 20.1, 20.2 der unteren Raumzelle 11.1 jeweils der jeweilige Vormontagekörper 107 des jeweiligen Vertikal-Verbindungsmittels 24 sowie der jeweilige Abstandvermittlungskörper 27 (Hülse) und der jeweilige Stützkörper 28 (Platte) eingesteckt worden sind, ragen von dem jeweiligen Vertikal-Verbindungsmittel 24 ausschließlich das obere erste Verbindungskörper-Ende 52.1 (Bolzen-Ende) mit einem Teil des Keil-Aufnahmeschlitzes 56 des jeweiligen Verbindungskörpers 25 (Bolzens) über den jeweilige oberen erstenn Außenwandteil 37.1 des jeweiligen oberen ersten Eck-Verbindungs-Hohlkörpers 20.1, 20.2 heraus. Spätestens daran anschließend wird der Verbindungskörper 25 (Bolzen) zusammen mit dem ersten Befestigungskörper 26.1, falls sich letzterer nicht eh schon in seiner Endmontagestellung befindet, um die Verbindungskörper-Längsachse 51 (Bolzen-Längsachse) des Verbindungskörpers 25 (Bolzens) so lange gedreht, bis die erste Befestigungskörper-Längsachse 64.1 des ersten Befestigungskörpers 26.1 quer, insbesondere senkrecht, zu der ersten Durchbrechungs-Längsachse 41.1 der ersten Durchbrechung 38.1 angeordnet ist. Dann hintergreifen bzw. untergreifen die in einer Richtung parallel zu der ersten Befestigungskörper-Längsachse 64.1 voneinander wegweisenden Befestigungskörper-Enden 74.1.1, 74.1.2 (Platten-Enden) des ersten Befestigungskörpers 26.1 die ersten Durchbrechungsränder 40.1 der in dem ersten Außenwandteil 37.1 vorgesehenen ersten Durchbrechung 38.1 des oberen Eck-Verbindungs-Hohlkörpers 20.1, 20.2 der unteren Raumzelle 11.1. Wenn der Verbindungskörper 25 (Bolzen) zusammen mit dem daran befestigten ersten Befestigungskörper 26.1 derart ausgerichtet ist, dass seine erste Befestigungskörper-Längsachse 64.1 senkrecht zu der ersten Durchbrechungs-Längsachse 41.1 der ersten Durchbrechung 38.1 verläuft, dann verläuft die Schlitz-Mittelebene 63 des Keil-Aufnahmeschlitzes 56 senkrecht zu dem die zweite Durchbrechung 38.2 enthaltenden zweiten Außenwandteil 37.2 des oberen Eck-Verbindungs-Hohlkörpers 20.1, 20.2 der unteren Raumzelle 11.1 und fällt entweder mit der zweiten Durchbrechungs-Längsachse 41.2 der zweiten Durchbrechung 38.2 zusammen (siehe Figuren 8 und 8.1) oder verläuft nahe der zweiten Durchbrechungs-Längsachse. Dadurch kann später der Keil 29 unproblematisch von außen in und durch die zweite Durchbrechung 38.2 in den Keil-Aufnahmeschlitz 56 des Verbindungskörpers 25 (Bolzens) eingesteckt und dort festgekeilt werden.

Anschließend kann bzw. wird auf die untere Raumzelle 11.1 eine obere Raumzelle 11.2, vorzugsweise mittels eines Krans, derart aufgesetzt, dass jeder Verbindungskörper 25 (Bolzen) mit seinem oberen ersten Verbindungskörper-Ende 52.1 (Bolzen-Ende) durch die jeweils zugeordnete untere, erste Durchbrechung 38.1 des jeweiligen unteren Eck-Verbindungs-Hohlkörpers 20.1, 20.2 der vier unteren Eck-Verbindungs-Hohlkörper 20.1, 20.2 der oberen Raumzelle 11.2 in den jeweiligen Hohlraum 36 hinein ragen.

Daran anschließend kann der jeweilige zweite Befestigungskörper 26.2, vorzugsweise von Hand, durch die jeweilige zweite oder dritte Durchbrechung 38.1, 38.2, vorzugsweise durch die jeweilige zweite Durchbrechung 38.2, des jeweiligen unteren Eck-Verbindungs-Hohlkörpers 20.1, 20.2 der oberen Raumzelle 11.2 hindurch, vorzugsweise von Hand, in den jeweiligen Hohlraum 36 und dort mit seiner Befestigungskörper-Bohrung 67 auf das jeweilige obere erste Verbindungskörper-Ende 52.1 (Bolzen-Ende) des jeweiligen Verbindungs-Körpers 25 (Bolzens) aufgesteckt werden. Fall sich dann der zweite Befestigungskörper 26.2 noch nicht in seiner Endmontagestellung befindet, wird er, vorzugsweise von Hand, um die Verbindungskörper-Längsachse 51 (Bolzen-Längsachse) der Verbindungskörpers 25 (Bolzens) so lange gedreht, bis seine zweite Befestigungskörper-Längsachse 64.2 quer, vorzugsweise senkrecht, zu der ersten Durchbrechungs-Längsachse 41.1 der ersten Durchbrechung 38.1 des unteren Eck-Verbindungs-Hohlkörpers 20.1, 20.2 der oberen Raumzelle 11.2 verläuft. Dann hintergreifen bzw. übergreifen die in einer Richtung parallel zu der zweiten Befestigungskörper-Längsachse 64.2 voneinander wegweisenden Befestigungskörper-Enden 74.2.1, 74.2.2 (Platten-Enden) des zweiten Befestigungskörpers 26.2 die Durchbrechungsränder 40.1 der in dem ersten Außenwandteil 37.1 vorgesehenen ersten Durchbrechung 38.1 des unteren Eck-Verbindungs-Hohlkörpers 20.1, 20.2 der oberen Raumzelle 11.2.

Daran anschließend kann der jeweilige Keil 29, vorzugsweise von Hand, ebenfalls durch die jeweilige zweite oder dritte Durchbrechung 38.2, 38.3, vorzugsweise durch die jeweilige zweite Durchbrechung 38.2, des jeweiligen unteren Eck-Verbindungs-Hohlkörpers 20.1, 20.2 der oberen Raumzelle 11.2 hindurch in Richtung des jeweiligen Hohlraums 36 überführt werden und kann dann dort mit seiner jeweiligen Keilspitze 104 voran in den jeweiligen Keil-Aufnahmeschlitz 56 gesteckt werden, und zwar derart, dass seine untere zweite Keilfläche 101.2 an der oberen ersten Hauptfläche 65.2.1 des jeweiligen zweiten Befestigungskörpers 26.2 anliegt und seine von der zweiten Keilfläche 101.2 weg weisende obere erste Keilfläche 102.1 an der Anlage-Schrägfläche 58 des jeweiligen Keil-Anlagekörpers 57 des jeweiligen Verbindungskörpers 25 (Bolzens) anliegt. Daran anschließend kann jeder Keil 29 mittels eines Eintreibmittels, vorzugsweise durch einen Hammerschlag auf die Eintreib-Fläche 105 mittels eines Hammers, eingetrieben bzw. eingeschlagen werden und kann dadurch in die Keil-Spannstellung 34 überführt werden, in der es zu einer vertikalen Verspannung des jeweiligen unteren Eck-Verbindungs-Hohlkörpers 20.1, 20.2 der oberen Raumzelle 11.2 mit dem jeweils zugeordneten oberen Eck-Verbindungs-Hohlkörper 20.1, 20.2 der unteren Raumzelle 11.1 und dadurch zur Ausbildung einer stabilen und steifen, jedoch wieder lösbaren, Vertikalverbindung der oberen Raumzelle 11.2 mit der unteren Raumzelle 11.1 kommt (siehe Figuren 8, 8.2 und 8.3). Erfindungsgemäß ist vorgesehen, dass jedes Vertikal-Verbindungsmittel 24 einen, sich in einer Keil-Spannstellung 34 befindlichen, vorzugsweise von außen, insbesondere manuell, anbringbaren und, wieder lösbaren Keil 29 umfasst, mittels dessen der jeweilige obere Eck-Verbindungs-Hohlkörper 20.1, 20.2 der jeweiligen unteren Raumzelle 11.1, 11.3 mit dem jeweils zugeordneten unteren Eck-Verbindungs-Hohlkörper 20.1, 20.2 der jeweiligen oberen Raumzelle 11.2, 11.4 jeweils unter Ausbildung einer innenliegenden Klemmverbindung vertikal gegeneinander, wiederlösbar verspannt sind, wobei jedes Vertikal-Verbindungsmittel 24 vollständig innenliegend, also vollständig innerhalb eines von dem jeweiligen oberen Eck-Verbindungs-Hohlkörper 20.1, 20.2 und von dem jeweils zugeordneten unteren Eck-Verbindungs-Hohlkörper 20.1, 20.2 beanspruchten Raumes angeordnet ist.

Wenn, wie beispielhaft in Figur 1 gezeigt, neben der dort links unten gezeigten unteren Raumzelle 11.1 eine weitere untere Raumzelle 11.3 aufgestellt werden soll, wie in Figur 1 rechts unten gezeigt, und wenn ggf. auf diese weitere untere Raumzelle 11.3 eine weitere obere Raumzelle 11.4 aufgesetzt werden soll, wie in Figur 1 rechts oben gezeigt, dann kann diese weitere untere Raumzelle 11.3 mit der bereits aufgestellten unteren Raumzelle 11.1 mittels Horizontal-Verbindungsmitteln 30 miteinander verbunden werden oder können diese beiden weiteren Raumzellen 11.3, 11.4 mit den beiden bereits übereinander aufgestellten Raumzellen 11.1, 11.2 jeweils mittels Horizontal-Verbindungsmitteln 30 miteinander verbunden werden, vorzugsweise jeweils unter Zwischenlage einer Vertikaldichtung 117. Ein bzw. mehrere solcher Horizontal-Verbindungsmittel 30 sind aus den Figuren 8.1, 8.2 und 8.3 ersichtlich. Eine bzw. mehrere solche vertikale Dichtungen 117 sind aus den Figuren 8.1 und 8 ersichtlich.

Jedes dieser Horizontal-Verbindungsmittel 30 umfasst einen, vorzugsweise langgestreckten, Verbindungskörper 31, zwei Befestigungselemente 33.1, 33.2 und zwei, vorzugsweise gleich gestaltete, Befestigungsteile 32.1, 32.2 . Als Verbindungskörper ist eine Schraube 31 vorgesehen. Diese ist einteilig mit einem über ihren Schraubenschaft 121 hinausstehenden Schraubenkopf 33.1 verbunden, der als ein erstes Befestigungselement der Befestigungselemente 33.1, 32.2 dient. Der Schraubenkopf 33.1 ist als ein Sechskant-Schraubenkopf gestaltet. Der Schraubenschaft 121 weist ein Außengewinde 122 auf. Als zweites Befestigungselement 33.2 ist eine Mutter vorgesehen. Die Mutter 33.2 weist ein Innengewinde auf. Das Innengewinde ist passend zu dem Außengewinde 122 der Schraube 31 gestaltet, so dass die Mutter 33.2 mit ihrem Innengewinde auf das Außengewinde 122 der Schraube 31 aufschraubbar ist. Als Befestigungsteile sind eine erste Befestigungs-Platte 32.1 und eine zweite Befestigungsplatte 32.2 vorgesehen. Jede dieser Befestigungs-Platten 32.1, 32.2 weist eine zentrale Befestigungs-Bohrung auf. Der Innendurchmesser der jeweiligen Befestigungs-Bohrung ist geringfügig größer als der Außendurchmesser des Schraubenschafts 121, so dass die Befestigungs-Platten 32.1, 32.2 mit ihrer jeweiligen Befestigungs-Bohrung auf den Schraubenschaft 121 aufgesteckt werden können. Die Befestigungs-Platten 32.1, 32.2 sind quaderförmig gestaltet. Jede Befestigungs-Platte 32.1, 32.2 weise eine Platten-Dicke 126, eine Platten-Breite 127 und eine Platten-Länge 128 auf. Vorzugsweise beträgt die Platten-Dicke 126 etwa 8 mm. Vorzugsweise beträgt die Platten-Breite 127 etwa 51 mm. Vorzugsweise beträgt die Platten-Länge 128 etwa 82 mm.

Jede Befestigungs-Platte 32.1, 32.2, die Schraube 31 und die Mutter 33.2 sind derart gestaltet, dass sie jeweils von außen, vorzugsweise von Hand, durch die zweite oder dritte Durchbrechung 38.1, 38.2, vorzugsweise durch die zweite Durchbrechung 38.2, in den Hohlraum 36 jedes Eck-Verbindungs-Hohlkörpers 20.1, 20.2 überführt werden kann.

Zum Zwecke einer Horizontal-Verbindung von zwei horizontal nebeneinander aufgestellten Raumzellen 11.1, 11.3; 11.2, 11.4, kann ein Befestigungsteil 32.1 der beiden Befestigungsteile 32.1, 32.2 mit seiner Befestigungs-Bohrung auf den Schraubenschaft 121 der Schraube 31 aufgesteckt werden, und zwar entweder noch vor oder erst nach der Einführung in den Hohlraum 36 des eines Eck-Verbindungs-Hohlkörpers 20.1, 20.2. Anschließend wird die den einen Befestigungsteil 32.1 tragende Schraube 31 mit ihrem freien Schraubenende voran in und durch eine dritte Durchbrechung 38.3 eines ersten Eck-Verbindungs-Hohlkörpers 20.1, 20.2 und von dort in und durch eine dritte Durchbrechung 38.3 eines dem ersten Eck-Verbindungs-Hohlkörper 20.1, 20.2 horizontal gegenüberliegenden zweiten Eck-Verbindungs-Hohlkörper 20.1, 20.2 gesteckt. Entweder noch vor dem Aufschrauben der Mutter 33.2 auf die Schraube 31 oder erst nach dem losen Aufschrauben der Mutter 33.2 auf die Schraube 31, kann bzw. wird eine Vertikaldichtung 117 zwischen die sich horizontal gegenüberliegenden Außenflächen der sich horizontal gegenüberliegenden zweiten Außenwandteile 37.2, 37. 2 der zugeordneten Eck-Verbindungs-Hohlkörper 20.1, 20.2 eingefügt. Nach dem Aufschrauben der Mutter 32.2 auf die Schraube 31 wird mittels eines oder mehrerer Werkzeuge, beispielsweise mittels eines oder mehrerer Gabelschlüssel oder Ringschlüssel, die Mutter 32.2 gegen den Schraubenkopf 33.1 der Schraube 31 soweit angezogen, bis die horizontal gegenüberliegenden Eck-Verbindungs-Hohlkörper 20.1, 20.2, gegebenenfalls mit der zwischenliegenden Vertikaldichtung 117, gegeneinander verspannt sind (siehe insbesondere Figur 8.1). Dadurch sind die betroffenen beiden horizontal nebeneinander angeordneten Raumzellen 11.1, 11.3; 11.2, 11.4 miteinander horizontal verspannt.

### BEZUGSZEICHENLISTE

- 10: Raumzellen-Anordnung/Raumzellen-Einheit
- 11: Raumzelle
- 11.1: Raumzelle (links unten)
- 11.2: Raumzelle (links oben)
- 11.3: Raumzelle (rechts unten)
- 11.4: Raumzelle (rechts oben)
- 12: Raumzellen-Längsrichtung
- 13.1: Boden-Rahmenprofil (längs)
- 13.2: Boden-Rahmenprofil (quer)
- 14.1: Decken-Rahmenprofil (längs)
- 14.2: Decken-Rahmenprofil (quer)
- 15: Steher/Vertikalpfosten/Ecksäule
- 16: (Boden-)Rahmen
- 17: (Decken-)Rahmen
- 18: Rahmenecke
- 19: Raum-Ecke
- 20: Eck-Verbindungs-Hohlkörper
- 21: Raumzellen-Längsachse
- 20.1: Eck-Verbindungs-Hohlkörper (1. Ausführungsvariante)
- 20.2: Eck-Verbindungs-Hohlkörper (2. Ausführungsvariante)
- 24: Vertikal-Verbindungsmittel
- 25: Verbindungskörper/Bolzen
- 26: Befestigungskörper/Platte
- 26.1: erster (unterer) Befestigungskörper/Platte
- 26.2: zweiter (oberer) Befestigungskörper/Platte
- 27: Abstandsvermittlungskörper/Hülse
- 28: Stützkörper/Platte
- 29: Keil
- 30: Horizontal-Verbindungsmittel
- 31: Verbindungskörper/Schraube
- 32.1: (erster) Befestigungsteil/Befestigungs-Platte
- 32.2: (zweiter) Befestigungsteil/Befestigungs-Platte
- 33.1: (erstes) Befestigungselement/Schraubenkopf/ Sechskant-Schraubenkopf
- 33.2: (zweites) Befestigungselement/Mutter
- 34: Keil-Spannstellung
- 35: Hohlkörper-Längsachse
- 36: Hohlraum
- 37.1: erster Außenwandteil
- 37.2: zweiter Außenwandteil
- 37.3: dritter Außenwandteil
- 37.4: (vierter) (unterer) Außenwandteil
- 37.5: (fünfter) Außenwandteil
- 37.6: (sechster) Außenwandteil
- 38.1: erste Durchbrechung/Langloch
- 38.2: zweite Durchbrechung/Langloch
- 38.3: dritte Durchbrechung/Langloch
- 39.1: erste Außenwand-Längsachse
- 39.2: zweite Außenwand-Längsachse
- 39.3: dritte Außenwand-Längsachse
- 40.1: erster Durchbrechungsrand
- 41.1: erste Durchbrechungs-Längsachse
- 41.2: zweite Durchbrechungs-Längsachse
- 41.3: dritte Durchbrechungs-Längsachse
- 41.1: erster Öffnungsquerschnitt
- 41.2: zweiter Öffnungsquerschnitt
- 41.3: dritter Öffnungsquerschnitt
- 43.1.1: (erste) Durchbrechungs-Länge von 38.1
- 43.1.2: (erste) Durchbrechungs-Breite von 38.1
- 43.2.1: (zweite) Durchbrechungs-Länge von 38.2
- 43.2.2: (zweite) Durchbrechungs-Breite von 38.3
- 43.3.1: (dritte) Durchbrechungs-Länge von 38.3
- 43.3.2: (dritte) Durchbrechungs-Breite von 38.3
- 46.1: erste Innenkontur von 38.1
- 46.2: zweite Innenkontur von 38.2
- 46.3: dritte Innenkontur von 38.3
- 47.1: (schmale) Stirnseite
- 47.2: Längsseite/(lange) Stirnseite
- 51: Verbindungskörper-Längsachse/Bolzen-Längsachse
- 52.1: (oberes) (freies) (erstes) Verbindungskörper-Ende/Bolzen-Ende
- 52.2: (unteres) (freies) (zweites) Verbindungskörper-Ende/Bolzen-Ende
- 53.2: Aufstandsfläche
- 54: Verbindungskörper-Länge/Bolzen-Länge
- 55: Verbindungskörper-Außendurchmesser/Bolzen-Außendurchmesser
- 56: Durchbrechung/Keil-Aufnahmeschlitz
- 57: Keil-Anlagekörper
- 58: Anlage-Schrägfläche
- 59: (spitzer) Winkel
- 60.1: (erste) Schlitzwand
- 60.2: (zweite) Schlitzwand
- 61: Querabstand
- 62.1: (erste) Keil-Führungsfläche
- 62.2: (zweite) Keil-Führungsfläche
- 63: Schlitz-Mittelebene
- 64: Befestigungskörper-Längsachse/Befestigungskörper-Längsrichtung
- 64.1: (erste) Befestigungskörper-Längsachse/ Befestigungskörper-Längsrichtung
- 64.2: (zweite) Befestigungskörper-Längsachse/ Befestigungskörper-Längsrichtung
- 65.1: (obere) Befestigungskörper-Hauptfläche von 26
- 65.1.1: (erste) (obere) Befestigungskörper-Hauptfläche von 26.1
- 65.1.2: (zweite) (untere) Befestigungskörper-Hauptfläche von 26.1
- 65.2: (untere) Befestigungskörper-Hauptfläche von 26
- 65.2.1: (erste) (obere) Befestigungskörper-Hauptfläche von 26.2
- 65.2.2: (erste) (untere) Befestigungskörper-Hauptfläche von 26.2
- 66: Befestigungskörper-Hauptflächen-Abstand/ Befestigungskörper-Dicke
- 67: (zentrale) Befestigungskörper-Durchbrechung/ Befestigungskörper-Bohrung
- 68: Innendurchmesser von 67
- 69: Befestigungskörper-Länge
- 70: Befestigungskörper-Breite
- 71.1: (erster) stirnseitiger Rand (von Befestigungskörper)
- 71.2: (zweiter) stirnseitiger Rand (von Befestigungskörper)
- 73: Außenkontur (von Befestigungskörper)
- 74.1.1: (erstes) Befestigungskörper-Ende von 26.1
- 74.1.2: (zweites) Befestigungskörper-Ende von 26.1
- 74.2.1: (erstes) Befestigungskörper-Ende von 26.2
- 74.2.2: (zweites) Befestigungskörper-Ende von 26.2
- 75.1: (erster) Längsabstand
- 75.2: (zweiter) Längsabstand
- 76: Abstandsvermittlungskörper-Längsachse/Hülsen-Längsachse
- 81: Abstandsvermittlungskörper-Länge/Hülsen-Länge/Hülsen-Höhe
- 82.1: (erste) (obere) Ring-Stirnfläche
- 82.2: (zweite) untere) Ring-Stirnfläche
- 83: Stützkörper-Längsachse
- 84.1: (erste) (obere) Stützkörper-Hauptfläche
- 84.2: (zweite) (untere) Stützkörper-Hauptfläche
- 85: Stützkörper-Hauptflächen-Abstand/Stützkörper-Dicke
- 86: Stützkörper-Durchbrechung/Stützkörper-Bohrung
- 87: Stützkörper-Innendurchmesser
- 88.1: (erste) Längs-Stirnfläche/-Stirnseite (von Stützkörper)
- 88.2: (erste) Längs-Stirnfläche/-Stirnseite (von Stützkörper)
- 89: Längs-Mittelebene (von Stützkörper)
- 90.1: Abstand
- 90.2: Abstand
- 91: Mittelpunkt von 86
- 92.1: (erste) Quer-Stirnseite/-Stirnfläche/Rand
- 92.2: (zweite) Quer-Stirnseite/-Stirnfläche/Rand
- 94.1: Radius von 92.1
- 94.2: Radius von 92.2
- 95: Stützkörper-Länge
- 96: Stützkörper-Breite
- 97: Außenkontur (von Stützkörper)
- 99.1: (erste) (seitliche) Keil-Führungsfläche
- 99.2: (zweite) (seitliche) Keil-Führungsfläche
- 100: Führungsflächen-Abstand/Keil-(Wand-)Dicke
- 101.1: (erste) (obere) Keilfläche
- 101.2: (zweite) (untere) Keilfläche
- 102: Keil-Winkel
- 103.1: (erstes) Keilende
- 103.2: (zweites) Keilende
- 104: Keilspitze
- 105: Eintreib-Fläche
- 106.1: (dritter) Längsabstand
- 106.2: (vierter) Längsabstand
- 107: Vormontagekörper
- 112.4: Innenfläche von 37.4
- 114.1: (erste) (obere) Außenseite/Außenfläche von 37.1
- 117: Vertikaldichtung
- 121: Schraubenschaft
- 122: Außengewinde
- 126: Befestigungsteil-Dicke/Platten-Dicke
- 127: Befestigungsteil-Breite/Platten-Breite
- 128: Befestigungsteil-Länge/Platten-Länge

## Patentansprüche

1. Raumzellen-Anordnung (10) umfassend mehrere Raumzellen (11; 11.1, 11.2, 11.3, 11.4), von denen wenigstens eine obere Raumzelle 11.2, 11.4) auf wenigstens einer unteren Raumzelle (11.1, 11.3) angeordnet ist, wobei die Raumzellen (11; 11.1, 11.2, 11.3, 11.4) jeweils quaderförmig ausgebildet sind und jeweils acht, jeweils eine Raum-Ecke (19) ausbildende, quaderförmige Eck-Verbindungs-Hohlkörper (20; 20.1, 20.2) umfassen, und wobei wenigstens zwei oder vier obere Eck-Verbindungs-Hohlkörper (20; 20.1, 20.2) der acht Eck-Verbindungs-Hohlkörper (20; 20.1, 20.2) der unteren Raumzelle (11.1, 11.3) mit jeweils einem unteren Eck-Verbindungs-Hohlkörper (20; 20.1, 20.2) der vier unteren Eck-Verbindungs-Hohlkörper (20; 20.1, 20.2) der acht Eck-Verbindungs-Hohlkörper (20; 20.1, 20.2) der oberen Raumzelle (11.2, 11.4) jeweils mittels eines Vertikal-Verbindungsmittels (24) fest, jedoch wieder lösbar verbunden sind, und wobei jeder quaderförmige Eck-Verbindungs-Hohlkörper (20; 20.1, 20.2) einen Hohlraum (36) zur Aufnahme von Verbindungsmittel-Teilen und in einem ersten Außenwandteil (37.1) wenigstens eine in den Hohlraum (36) mündende erste Durchbrechung (38.1) aufweist, und wobei jedes Vertikal-Verbindungsmittel (24) vollständig innenliegend, also vollständig innerhalb eines von dem jeweiligen oberen Eck-Verbindungs-Hohlkörper (20; 20.1, 20.2) und von dem jeweils zugeordneten unteren Eck-Verbindungs-Hohlkörper (20; 20.1, 20.2) beanspruchten Raumes angeordnet ist,
**dadurch gekennzeichnet,**
**dass** jedes Vertikal-Verbindungsmittel (24) einen, sich in einer Keil-Spannstellung (34) befindlichen, wieder lösbaren Keil (29) umfasst, mittels dessen der jeweilige obere Eck-Verbindungs-Hohlkörper (20; 20.1, 20.2) der unteren Raumzelle (11.1, 11.3) mit dem jeweils zugeordneten unteren Eck-Verbindungs-Hohlkörper (20; 20.1, 20.2) der oberen Raumzelle (11.2, 11.4) jeweils unter Ausbildung einer innenliegenden Klemmverbindung vertikal gegeneinander, wiederlösbar verspannt sind.

2. Raumzellen-Anordnung nach Anspruch 1, **dadurch gekennzeichnet, dass** jedes Vertikal-Verbindungsmittel (24) einen sich sowohl durch die erste Durchbrechung (38.1) des ersten Außenwandteils (37.1) des jeweiligen oberen Eck-Verbindungs-Hohlkörpers (20; 20.1, 20.2) der unteren Raumzelle (11.1, 11.3) als auch durch die erste Durchbrechung (38.1) des dem ersten Außenwandteil (37.1) des jeweiligen oberen Eck-Verbindungs-Hohlkörpers (20; 20.1, 20.2) gegenüberliegenden ersten Außenwandteils (37.1) des jeweiligen unteren Eck-Verbindungs-Hohlkörpers (20; 20.1, 20.2) der oberen Raumzelle (11.2, 11.4) in Richtung seiner Verbindungskörper-Längsachse (51) erstreckenden Verbindungskörper (25) aufweist, an dem wenigstens ein erster Befestigungskörper (26; 26.1) und ein zweiter Befestigungskörper (26; 26.2) befestigt sind, wobei der erste Befestigungskörper (26; 26.1) einen ersten Durchbrechungsrand (40.1) der ersten Durchbrechung (38.1) des jeweiligen oberen Eck-Verbindungs-Hohlkörpers (20; 20.1, 20.2) der unteren Raumzelle (11.1, 11.3) hintergreift und der zweite Befestigungskörper (26; 26.2) einen Durchbrechungsrand (40.1) der ersten Durchbrechung (38.1) des jeweiligen unteren Eck-Verbindungs-Hohlkörpers (20; 20.1, 20.2) der oberen Raumzelle (11.1, 11.4) hintergreift und dass
entweder der erste Befestigungskörper (26; 26.1) mit dem Verbindungskörper (25) fest verbunden ist und der zweite Befestigungskörper (26; 26.2) relativ zu dem Verbindungskörper (25) entlang dessen Verbindungskörper-Längsachse (51) verschieblich mit dem Verbindungskörper (25) verbunden ist, wobei der Keil (29) mit einer ersten Keilfläche (101.1) an einem Keil-Anlagekörper (57) des Verbindungskörpers (25) anliegt und mit einer zweiten Keilfläche (101.2), die von der ersten Keilfläche (101.1) weg weist, an dem relativ zu dem Verbindungskörper (25) verschieblichen zweiten Befestigungskörper (26; 26.2) anliegt
oder der erste Befestigungskörper relativ zu dem Verbindungskörper entlang dessen Verbindungskörper-Längsachse verschieblich mit dem Verbindungskörper verbunden ist und der zweite Befestigungskörper mit dem Verbindungskörper fest verbunden ist, wobei der Keil mit einer ersten Keilfläche an einem Keil-Anlagekörper des Verbindungskörpers anliegt und mit einer zweiten Keilfläche, die von der ersten Keilfläche weg weist, an dem relativ zu dem Verbindungskörper verschieblichen ersten Befestigungskörper anliegt.

3. Raumzellen-Anordnung nach Anspruch 2, **dadurch gekennzeichnet, dass** der Keil-Anlagekörper (57) im Bereich eines freien ersten Verbindungskörper-Endes (52.1) des Verbindungskörpers (25) angeordnet ist.

4. Raumzellen-Anordnung nach Anspruch 2 oder 3, **dadurch gekennzeichnet, dass** der Keil-Anlagekörper (57) eine Anlage-Schrägfläche (58) für den Keil (29) aufweist, an welcher die erste Keilfläche (101.1) des Keils (29) anliegt, die mit der Verbindungskörper-Längsachse (51) einen Winkel (59) einschließt, der kleiner ist als 90 Grad.

5. Raumzellen-Anordnung nach einem der Ansprüche 2 bis 4, **dadurch gekennzeichnet, dass** der mit dem Verbindungskörper (25) fest verbundene Befestigungskörper (26.1) sich entlang seiner Befestigungskörper-Längsachse (64.1) erstreckt und dass der Keilaufnahme-Schlitz (56) sich in einer Querrichtung senkrecht zu der Befestigungskörper-Längsachse (64.1) durch den Verbindungskörper (25) erstreckt.

6. Raumzellen-Anordnung nach einem der Ansprüche 2 bis 5, **dadurch gekennzeichnet, dass** der erste Befestigungskörper (26.1) eine erste Befestigungskörper-Durchbrechung (67) aufweist, durch die der Verbindungskörper (25) durchgesteckt ist und/oder dass der zweite Befestigungskörper (26.2) eine zweite Befestigungskörper-Durchbrechung (67) aufweist, durch die der Verbindungskörper (25) durchgesteckt ist.

7. Raumzellen-Anordnung nach einem der Ansprüche 2 bis 6, **dadurch gekennzeichnet, dass** der relativ zu dem Verbindungskörper (25) verschiebliche Befestigungskörper (26.2) um die Verbindungskörper-Längsachse (51) frei drehbar angeordnet ist.

8. Raumzellen-Anordnung nach einem der Ansprüche 2 bis 7, **dadurch gekennzeichnet, dass** an dem Verbindungskörper (25) in einem zwischen dem ersten Befestigungskörper (26.1) und dem zweiten Befestigungskörper (26.2) angeordneten ersten Verbindungskörper-Vertikalbereich ein relativ zu dem Verbindungskörper (25) entlang dessen Verbindungskörper-Längsachse (51) verschieblicher Stützkörper (28) befestigt ist, dessen Außenkontur (97) derart auf eine erste Innenkontur (46.1) eines der Außenkontur (97) gegenüberliegenden ersten Durchbrechungsrands (40.1) der ersten Durchbrechung (38.1) abgestimmt gestaltet ist, dass der Stützkörper (28) unter Ausbildung eines geringen Umfangs-Spalts zumindest teilweise in der ersten Durchbrechung (38.1) aufgenommen ist.

9. Raumzellen-Anordnung nach Anspruch 8, **dadurch gekennzeichnet, dass** der Stützkörper (28) eine Stützkörper-Durchbrechung (86) aufweist, durch die der Verbindungskörper (25) durchgesteckt ist.

10. Raumzellen-Anordnung nach einem der Ansprüche 8 oder 9, **dadurch gekennzeichnet, dass** der Stützkörper (28) um die Verbindungskörper-Längsachse (51) frei drehbar angeordnet ist.

11. Raumzellen-Anordnung nach einem der Ansprüche 8 bis 10, **dadurch gekennzeichnet, dass** an dem Verbindungskörper (25) in einem zwischen dem Stützkörper (28) und dem ersten Befestigungskörper (26.1) oder in einem zwischen dem Stützkörper und dem zweiten Befestigungskörper angeordneten zweiten Verbindungskörper-Vertikalbereich ein relativ zu dem Verbindungskörper (25) entlang dessen Verbindungskörper-Längsachse (51) verschieblicher Abstandvermittlungskörper (27) befestigt ist, der entweder den Stützkörper (28) und den ersten Befestigungskörper (26.1) in einem seiner Abstandvermittlungskörper-Höhe (81) entsprechenden ersten Längsabstand (75.1) zueinander hält oder den Stützkörper und den zweiten Befestigungskörper in einem seiner Abstandvermittlungskörper-Höhe entsprechenden ersten Längsabstand zueinander hält.

12. Raumzellen-Anordnung nach einem der Ansprüche 8 bis 11, **dadurch gekennzeichnet, dass** der Stützköper (28) in einer fertig montierten Stellung des Vertikal-Verbindungsmittels (24) sowohl in die erste Durchbrechung (38.1) des oberen Eck-Verbindungs-Hohlkörpers (20; 20.1, 20.2) der unteren Raumzelle (11.1, 11.3) als auch in die erste Durchbrechung (38.1) des unteren Eck-Verbindungs-Hohlkörpers (20; 20.1, 20.2) der oberen Raumzelle (11.2, 11.4) hineinragt.

13. Raumzellen-Anordnung nach einem der Ansprüche 11 oder 12, **dadurch gekennzeichnet, dass** der Verbindungskörper (25), der erste Befestigungskörper (26.1), der Abstandsvermittlungskörper (27) und der Stützkörper (28) derart aufeinander abgestimmt gestaltet sind, dass der Stützkörper (28) zu dem, in der Einbaustellung unteren, zweiten Verbindungskörper-Ende (52.2) des Verbindungskörpers (25) einen dritten Längsabstand (106.1) aufweist, der gleich groß oder kleiner ist als ein zweiter Längsabstand (106.2) zwischen einer unteren Innenfläche (112.4) eines unteren Außenwandteils (37.4) des unteren Eck-Verbindungs-Hohlkörpers (20; 20.1, 20.2) und einer oberen ersten Außenfläche (114.1) des die erste Durchbrechung (38.1) aufweisenden ersten Außenwandteils (37.1) des unteren Eck-Verbindungskörpers (20; 20.1, 20.2).

14. Raumzellen-Anordnung nach einem der vorstehenden Ansprüche, **dadurch gekennzeichnet, dass** jeder Eck-Verbindungs-Hohlkörper (20; 20.1, 20.2) wenigstens eine zweite Durchbrechung (38.2) in einem zweiten Außenwandteil (37.2) aufweist, das senkrecht zu dem die erste Durchbrechung (38.1) aufweisenden ersten Außenwandteil (37.1) ausgerichtet ist, wobei die zweite Durchbrechung (38.2) in den Hohlraum (36) mündet sowie derart angeordnet und gestaltet ist, dass der Keil (29) durch einen Eingriff von außen in oder durch die zweite Durchbrechung (38.2) lösbar ist und von außen wieder in seine Keil-Spannstellung (34) überführbar ist.

15. Raumzellen-Anordnung nach Anspruch 14, **dadurch gekennzeichnet, dass** jeder Eck-Verbindungs-Hohlkörper (20; 20.1, 20.2) wenigstens eine dritte Durchbrechung (38.3) in einem dritten Außenwandteil (37.3) aufweist, das senkrecht zu dem die erste Durchbrechung (38.1) aufweisenden ersten Außenwandteil (37.1) und senkrecht zu dem die zweite Durchbrechung (38.2) aufweisenden zweiten Außenwandteil (37.2) ausgerichtet ist, wobei die dritte Durchbrechung (38.3) in den Hohlraum 36) mündet.

## Claims

1. Room cell arrangement (10) comprising several room cells (11; 11.1, 11.2, 11.3, 11.4), of which at least one upper room cell 11.2, 11.4) is arranged on at least one lower room cell (11.1, 11.3), wherein the room cells (11; 11.1, 11.2, 11.3, 11.4) are each cuboid and each comprise eight cuboid corner connecting hollow bodies (20; 20.1, 20.2) each forming a space corner (19), and wherein at least two or four upper corner connecting hollow bodies (20; 20.1, 20.2) of the eight corner connecting hollow bodies (20; 20.1, 20.2) of the lower room cell (11.1, 11.3) are each firmly but releasably connected with a lower corner connecting hollow body (20; 20.1, 20.2) of the four lower corner connecting hollow bodies (20; 20.1, 20.2) of the eight corner connecting hollow bodies (20; 20.1, 20.2) of the upper room cell (11.2, 11.4) by means of a vertical connecting means (24) are, and wherein each cuboid corner connecting hollow body (20; 20.1, 20.2) has a cavity (36) for receiving connector parts and in a first outer wall part (37.1) has at least one first opening (38.1) opening into the cavity (36), and wherein each vertical connecting means (24) is arranged completely inside, i.e. completely within a space occupied by the respective upper corner connection hollow body (20; 20.1, 20.2) and by the respectively assigned lower corner connection hollow body (20; 20.1, 20.2),
**characterized in that**
each vertical connecting means (24) comprises a releasable wedge (29) located in a wedge clamping position (34), by means of which the respective upper corner connecting hollow body (20; 20.1, 20.2) of the lower room cell (11.1, 11.3) and the respectively assigned lower corner connection hollow body (20; 20.1, 20.2) of the upper room cell (11.2, 11.4) are vertically, releasably braced against each other each with the formation of an internal clamping connection.

2. Room cell arrangement according to claim 1, **characterized in that** each vertical connecting means (24) is provided both through the first opening (38.1) of the first outer wall part (37.1) of the respective upper corner connecting hollow body (20; 20.1, 20.2) of the lower room cell (11.1, 11.3) and through the first opening (38.1) of the first outer wall part (37.1) of the respective upper corner connection hollow body (20; 20.1, 20.2) opposite first outer wall part (37.1) of the respective lower corner connection hollow body (20; 20.1, 20.2) of the upper room cell (11.2, 11.4) in the direction of its connecting body longitudinal axis (51) extending connecting body (25) on which at least a first fastening body (26; 26.1) and a second fastening body (26; 26.2) are attached, wherein the first fastening body (26; 26.1) has a first opening edge (40.1) of the first opening (38.1) of the respective upper corner connecting hollow body (20; 20.1, 20.2) of the lower space cell (11.1, 11.3) engages behind, and wherein the second fastening body (26; 26.2) engages behind an opening edge (40.1) of the first opening (38.1) of the respective lower corner connecting hollow body (20; 20.1, 20.2) of the upper room cell (11.1, 11.4) and that
either the first fastening body (26; 26.1) is firmly connected with the connecting body (25) and the second fastening body (26; 26.2) is connected to the connecting body (25) so as to be displaceable relative to the connecting body (25) along its connecting body longitudinal axis (51), wherein the wedge (29) rests with a first wedge surface (101.1) on a wedge contact body (57) of the connecting body (25) and with a second wedge surface (101.2) facing away from the first wedge surface (101.1) on the second fastening body (25), which is displaceable relative to the connecting body (26; 26.2)
or the first fastening body is connected to the connecting body so as to be displaceable relative to the connecting body along its longitudinal axis of the connecting body and the second fastening body is firmly connected to the connecting body, wherein the wedge rests with a first wedge surface on a wedge contact body of the connection body and with a second wedge surface facing away from the first wedge surface on the first fastening body, which is displaceable relative to the connection body.

3. Room cell arrangement according to claim 2, **characterized in that** the wedge contact body (57) is arranged in the region of a free first connecting body end (52.1) of the connecting body (25).

4. Room cell arrangement according to claim 2 or 3, **characterized in that** the wedge contact body (57) has an inclined contact surface (58) for the wedge (29) on which the first wedge surface (101.1) of the wedge (29) rests, which includes an angle (59) with the connecting body longitudinal axis (51) which is smaller than 90 degrees.

5. Room cell arrangement according to one of claims 2 to 4, **characterized in that** the fastening body (26.1) firmly connected to the connecting body (25) extends along its longitudinal axis (64.1) of the fastening body and that the wedge-receiving slot (56) extends in a Transverse direction perpendicular to the fastening body longitudinal axis (64.1) through the connecting body (25).

6. Room cell arrangement according to one of claims 2 to 5, **characterized in that** the first fastening body (26.1) has a first fastening body opening (67) through which the connecting body (25) is pushed and / or that the second fastening body (26.2) has a second fastening body opening (67) through which the connecting body (25) is pushed.

7. Room cell arrangement according to one of claims 2 to 6, **characterized in that** the fastening body (26.2), which is displaceable relative to the connecting body (25), is arranged freely rotatable about the connecting body longitudinal axis (51).

8. Room cell arrangement according to one of claims 2 to 7, **characterized in that** on the connecting body (25) in a first connecting body vertical region arranged between the first fastening body (26.1) and the second fastening body (26.2) a vertical region relative to the connecting body (25) along whose connecting body longitudinal axis (51) a displaceable supporting body (28) is attached, the outer contour (97) of which is designed so as to match a first inner contour (46.1) of a first opening edge (40.1) of the first opening (38.1) opposite the outer contour (97) that the support body (28) is at least partially received in the first opening (38.1) with the formation of a small circumferential gap.

9. Room cell arrangement according to claim 8, **characterized in that** the support body (28) has a support body opening (86) through which the connecting body (25) is pushed.

10. Room cell arrangement according to one of claims 8 or 9, **characterized in that** the support body (28) is arranged freely rotatable about the connecting body longitudinal axis (51).

11. Room cell arrangement according to one of claims 8 to 10, **characterized in that** on the connecting body (25) in a second connecting body arranged between the supporting body (28) and the first fastening body (26.1) or in a second connecting body arranged between the supporting body and the second fastening body In the vertical area, a spacing body (27) is attached which is displaceable relative to the connecting body (25) along its connecting body longitudinal axis (51) and which either has the supporting body (28) and the first fastening body (26.1) at a first corresponding to its spacing body height (81) maintains a longitudinal distance (75.1) from one another or keeps the support body and the second fastening body at a first longitudinal distance from one another which corresponds to its spacing body height.

12. Room cell arrangement according to one of claims 8 to 11, **characterized in that** the support body (28) in a fully assembled position of the vertical connecting means (24) both in the first opening (38.1) of the upper corner connecting hollow body (20; 20.1, 20.2) of the lower space cell (11.1, 11.3) as well as into the first opening (38.1) of the lower corner connecting hollow body (20; 20.1, 20.2) of the upper space cell (11.2, 11.4) protrudes.

13. Room cell arrangement according to one of claims 11 or 12, **characterized in that** the connecting body (25), the first fastening body (26.1), the spacing-mediating body (27) and the supporting body (28) are designed so that the supporting body (28) to the second connecting body end (52.2) of the connecting body (25), which is lower in the installed position, has a third longitudinal distance (106.1) which is equal to or smaller than a second longitudinal distance (106.2) between a lower inner surface (112.4) of a lower outer wall part (37.4) of the lower corner connecting hollow body (20; 20.1, 20.2) and an upper first outer surface (114.1) of the first outer wall part (37.1) of the lower corner connecting hollow body (20; 20.1, 20.1) having the first opening (38.1).

14. Room cell arrangement according to one of the preceding claims, **characterized in that** each corner connecting hollow body (20; 20.1, 20.2) has at least one second opening (38.2) in a second outer wall part (37.2) which is perpendicular to which the first opening (38.1) having the first outer wall part (37.1), the second opening (38.2) opening into the cavity (36) and being arranged and designed in such a way that the wedge (29) is engaged from the outside into or through the second opening (38.2) is releasable and can be transferred again from the outside into its wedge clamping position (34).

15. Room cell arrangement according to claim 14, **characterized in that** each corner connecting hollow body (20; 20.1, 20.2) has at least one third opening (38.3) in a third outer wall part (37.3) which is perpendicular to which the first opening (38.1) having the first outer wall part (37.1) and perpendicular to the second outer wall part (37.2) having the second opening (38.2), the third opening (38.3) opening into the cavity (36).

## Revendications

1. Agencement de cellules de pièce (10) comprenant plusieurs cellules de pièce (11; 11.1, 11.2, 11.3, 11.4), dont au moins une cellule de pièce supérieure 11.2, 11.4) est disposée sur au moins une cellule de pièce inférieure (11.1, 11.3), les cellules de pièce (11; 11.1, 11.2, 11.3, 11.4) sont chacun parallélépipédiques et comprennent chacun huit corps creux de raccordement d'angle (20; 20.1, 20.2) cuboïde formant chacun un coin d'espace (19), et au moins deux ou quatre corps creux de raccordement d'angle supérieurs (20; 20.1, 20.2) des huit corps creux de raccordement d'angle (20; 20.1, 20.2) de la cellule de pièce inférieure (11.1, 11.3) chacun avec un corps creux de raccordement d'angle inférieur (20; 20.1, 20.2) des quatre corps creux de raccordement d'angle inférieur (20; 20.1, 20.2) des huit corps creux de raccordement d'angle (20; 20.1, 20.2) de la cellule de pièce supérieure (11.2, 11.4), chacun étant solidaire mais amovible au moyen d'un moyen de raccordement vertical (24) sont, et chaque corps creux de raccordement d'angle cuboïde (20; 20.1, 20.2) a une cavité (36) pour recevoir des parties de connecteur et dans une première partie de paroi extérieure (37.1) a au moins une première ouverture (38.1) débouchant dans la cavité (36), et chaque moyen de raccordement vertical (24) est disposé complètement à l'intérieur, c'est-à-dire complètement à l'intérieur d'un espace occupé par le corps creux de raccordement d'angle supérieur respectif (20; 20.1, 20.2) et par le corps creux de raccordement d'angle inférieur associé respectif (20; 20.1, 20.2),
**caractérisé par le fait**
**que** chaque moyen de raccordement vertical (24) comprend une cale à nouveau détachable (29) située dans une position de serrage de coin (34), au moyen de laquelle le corps creux de raccordement d'angle supérieur respectif (20; 20.1, 20.2) de la cellule de pièce inférieure (11.1, 11.3) et le corps creux de raccordement d'angle inférieur respectivement associé (20 ; 20.1, 20.2) de la cellule de pièce supérieure (11.2, 11. 4) sont serrés verticalement l'un contre l'autre de manière amovible, formant ainsi un assemblage par serrage interne.

2. Agencement de cellules de pièce selon la revendication 1, **caractérisé par le fait que** chaque moyen de raccordement vertical (24) est prévu à la fois à travers la première ouverture (38.1) de la première partie de paroi extérieure (37.1) du corps creux de raccordement d'angle supérieur respectif (20; 20.1, 20.2) de la cellule de pièce inférieure (11.1, 11.3) et à travers la première ouverture (38.1) de la première partie de paroi extérieure (37.1) du corps creux de raccordement d'angle supérieur respectif (20; 20.1, 20.2) opposé à la première partie de paroi extérieure (37.1) du corps creux de raccordement d'angle inférieure respectif (20; 20.1, 20.2) de la cellule de pièce supérieure (11.2, 11.4) en direction de son axe longitudinal du corps de raccordement (51) prolongeant le corps de raccordement (25) sur lequel au moins un premier corps de fixation (26; 26.1) et un deuxième corps de fixation (26; 26.2) sont fixés, dans lequel le premier corps de fixation (26; 26.1) a un premier bord d'ouverture (40.1) de la première ouverture (38.1) du corps creux de raccordement d'angle supérieur respectif (20; 20.1, 20.2) de la cellule de pièce inférieur (11.1, 11.3) s'engage derrière et le deuxième corps de fixation (26; 26.2) un bord d'ouverture (40.1) de la première ouverture (38.1) du corps creux de raccordement d'angle inférieur respectif (20; 20.1, 20.2) de la cellule de pièce supérieure (11.1, 11.4) s'engage derrière et que
soit le premier corps de fixation (26; 26.1) est relié avec le corps de raccordement (25) de manière fixe et le deuxième corps de fixation (26; 26.2) est relié au corps de raccordement (25) de manière à être déplaçable par rapport au corps de raccordement (25) le long de son axe longitudinal du corps de raccordement (51), la cale (29) ayant une première surface de la cale (101.1) repose contre un corps de contact pour la cale (57) du corps de raccordement (25) et avec une seconde surface de la cale (101.2) opposée à la première surface de la cale (101.1) sur le second corps de raccordement (25) qui est déplaçable par rapport au corps de raccordement (26; 26.2)
ou le premier corps de fixation est relié au corps de raccordement de manière à être déplaçable par rapport au corps de raccordement le long de son axe longitudinal du corps de raccordement et le deuxième corps de raccordement est relié avec le corps de raccordement de manière fixe, la cale ayant une première surface de la cale repose contre un corps de contact pour la cale du corps de raccordement et avec une seconde surface de la cale opposée à la première surface de la cale sur le premier corps de fixation qui est déplaçable par rapport au corps de raccordement.

3. Agencement de cellules de pièce selon la revendication 2, **caractérisé par le fait que** le corps de contact pour la cale (57) est disposé dans la région d'une première extrémité de corps de connexion libre (52.1) du corps de raccordement (25).

4. Agencement de cellules de pièce selon la revendication 2 ou 3, **caractérisé par le fait que** le corps de contact pour la cale (57) présente une surface de contact inclinée (58) pour la cale (29) sur laquelle repose la première surface (101.1) de la cale (29), qui comprend un angle (59) avec l'axe longitudinal du corps de raccordement (51) qui est inférieur à 90 degrés.

5. Agencement de cellules de pièce selon l'une des revendications 2 à 4, **caractérisé par le fait que** le corps de fixation (26.1) solidaire du corps de raccordement (25) s'étend le long de son axe longitudinal (64.1) du corps de fixation et **par le fait que** la fente de réception de la cale (56) s'étend en un direction transversale perpendiculaire à l'axe longitudinal du corps de fixation (64.1) à travers le corps de raccordement (25).

6. Agencement de cellules de pièce selon l'une des revendications 2 à 5, **caractérisé par le fait que** le premier corps de fixation (26.1) présente une première ouverture de corps de fixation (67) à travers laquelle le corps de raccordement (25) est poussé et / ou **par le fait que** le deuxième corps de fixation (26.2) présente une seconde ouverture de corps de fixation (67) à travers laquelle le corps de raccordement (25) est poussé.

7. Agencement de cellules de pièce selon l'une des revendications 2 à 6, **caractérisé par le fait que** le corps de fixation (26.2), déplaçable par rapport au corps de raccordement (25), est disposé en rotation libre autour de l'axe longitudinal du corps de raccordement (51).

8. Agencement de cellules de pièce selon l'une des revendications 2 à 7, **caractérisé par le fait que** sur le corps de raccordement (25) dans une première région verticale du corps de raccordement disposée entre le premier corps de fixation (26.1) et le deuxième corps de fixation (26.2) une zone verticale par rapport au corps de raccordement (25) le long de l'axe longitudinal du corps de raccordement (51) est fixé un corps de support déplaçable (28), dont le contour extérieur (97) est conçu de manière à épouser un premier contour intérieur (46.1) d'un premier bord d'ouverture (40.1) de la première ouverture (38.1) opposé au contour extérieur (97) en ce que le corps de support (28) est au moins partiellement reçu dans la première ouverture (38.1) avec la formation d'un petit espace circonférentiel.

9. Agencement de cellules de pièce selon la revendication 8, **caractérisé par le fait que** le corps de support (28) présente une ouverture de corps de support (86) à travers laquelle le corps de raccordement (25) est poussé.

10. Agencement de cellules de pièce selon l'une des revendications 8 ou 9, **caractérisé par le fait que** le corps de support (28) est disposé en rotation libre autour de l'axe longitudinal du corps de raccordement (51).

11. Agencement de cellules de pièce selon l'une des revendications 8 à 10, **caractérisé par le fait que** sur le corps de raccordement (25) dans un second corps de raccordement disposé entre le corps de support (28) et le premier corps de fixation (26.1) ou dans un second corps de raccordement disposé entre le corps de support et le second corps de fixation dans la zone verticale, un corps d'espacement (27) est fixé qui est déplaçable par rapport au corps de raccordement (25) le long de son axe longitudinal de corps de raccordement (51) et qui maintient soit le corps de support (28) et le premier corps de fixation (26.1) à un premier espacement longitudinal (75.1) l'un de l'autre qui correspond à sa hauteur de corps d'espacement (81) ou le corps de support et le deuxième corps de fixation à un premier espacement longitudinal l'un de l'autre qui correspond à sa hauteur de corps d'espacement.

12. Agencement de cellule de pièce selon l'une des revendications 8 à 11, **caractérisé par le fait que** le corps de support (28) est en position complètement assemblée des moyens de raccordement verticaux (24) aussi bien dans la première ouverture (38.1) du corps creux de raccordement d'angle supérieur (20); 20.1, 20.2) de la cellule de pièce inférieure (11.1, 11.3) ainsi que dans la première ouverture (38.1) du corps creux de raccordement d'angle inférieur (20; 20.1, 20.2) de la cellule spatiale supérieure (11.2, 11.4) fait saillie.

13. Agencement de cellules de pièce selon l'une des revendications 11 ou 12, **caractérisé par le fait que** le corps de raccordement (25), le premier corps de fixation (26.1), le corps intermédiaire d'écartement (27) et le corps de support (28) sont conçus de telle sorte que le corps de support (28) à la deuxième extrémité de corps de connexion (52.2) du corps de raccordement (25), qui est plus basse en position installée, présente une troisième distance longitudinale (106.1) qui est égale ou inférieure à une deuxième distance longitudinale (106.2) entre une surface intérieure inférieure (112.4) d'un partie de paroi extérieure inférieure (37.4) du corps creux de raccordement d'angle inférieur (20; 20.1, 20.2) et une première surface externe supérieure (114.1) de la première partie de paroi extérieure (37.1) du corps de raccordement d'angle inférieur (20; 20.1, 20.2) ayant la première ouverture (38.1).

14. Agencement de cellules de pièce selon l'une des revendications précédentes, **caractérisé par le fait que** chaque corps creux de raccordement d'angle (20; 20.1, 20.2) présente au moins une deuxième ouverture (38.2) dans une seconde partie de paroi extérieure (37.2) perpendiculaire à laquelle la première ouverture (38.1) ayant la première partie de paroi extérieure (37.1), la deuxième ouverture (38.2) débouchant dans la cavité (36) et étant agencée et conçue de telle manière que II cale (29) est engagé de l'extérieur dans ou à travers la deuxième ouverture (38.2) est libérable et peut être transférée à nouveau de l'extérieur dans sa position de serrage de coin (34).

15. Agencement de cellules de pièce selon la revendication 14, **caractérisé par le fait que** chaque corps creux de raccordement d'angle (20; 20.1, 20.2) présente au moins une troisième ouverture (38.3) dans une troisième partie de paroi extérieure (37.3) perpendiculaire à laquelle la première ouverture (38.1) ayant la première partie de paroi extérieure (37.1) et perpendiculaire à la deuxième partie de paroi extérieure (37.2) ayant la deuxième ouverture (38.2), la troisième ouverture (38.3) débouchant dans la cavité 36).
